# EUROPÄISCHE PATENTSCHRIFT

(11) **EP 3 587 313 B1**
(45) Veröffentlichungstag und Bekanntmachung des Hinweises auf die Patenterteilung: **28.05.2025**
(21) Anmeldenummer: 19166498.6
(22) Anmeldetag: 01.04.2019
(51) Int. Cl.: B65G 57/32, B65G 61/00, B65G 57/00

(54) **VERFAHREN ZUM STAPELN VON ARTIKELN UND/ODER STÜCKGÜTERN UND STAPELBILDUNGSVORRICHTUNG**
METHOD FOR STACKING ARTICLES AND/OR PIECE GOODS AND STACKING DEVICE
PROCÉDÉ D'EMPILEMENT D'ARTICLES ET / OU DE MARCHANDISES DE DÉTAIL ET DISPOSITIF DE FORMATION D'EMPILEMENT

(30) Priorität: 29.06.2018 DE 102018115739
(43) Veröffentlichungstag der Anmeldung: 01.01.2020
(73) Patentinhaber: Krones Aktiengesellschaft, 93073 Neutraubling (DE)
(72) Erfinder: STADLER, Thomas, 93073 Neutraubling (DE); SPINDLER, Herbert, 93073 Neutraubling (DE); GABLER, Markus, 93073 Neutraubling (DE)
(74) Vertreter: Benninger, Johannes

(56) Entgegenhaltungen:
- EP-A1- 1 612 164
- EP-A1- 2 762 428
- EP-A2- 2 174 895
- WO-A1-2016/053788
- WO-A1-2017/044522
- CN-A- 106 516 760
- DE-A1- 102016 105 570
- JP-A- S6 274 832
- US-A1- 2006 182 545
- US-A1- 2011 238 207

## Beschreibung

Die vorliegende Erfindung betrifft ein Verfahren zum Stapeln von Artikeln und/oder Stückgütern und eine Stapelbildungsvorrichtung.

Zur Palettierung von gesamten Artikellagen durchlaufen die Artikel normalerweise zunächst eine Gruppierstation, in der die transportierten Artikel zu palettierfähigen Lagen zusammengestellt werden. Diese palettierfähigen Lagen werden dann an eine Beladestation überführt. Die Beladestation legt diese Artikellagen dann an einem gewünschten Ort ab. Dieser Ort wird in der Praxis durch einen Stapelplatz und eine darauf befindliche Transportpalette gebildet, auf der die Artikellagen abgelegt werden können.

Eine solche Palettiervorrichtung ist beispielsweise aus der EP 1 321 396 A1 bekannt. Dort ist eine Palettiervorrichtung offenbart, bei welcher die Artikel in ungeordneter Weise von einer Horizontalfördereinrichtung in seitlicher Richtung verschoben und dabei gruppiert werden, bevor sie in kompletten Lagen auf eine Hubeinrichtung überführt werden. Die Hubeinrichtung bzw. Transferplattform dient dabei als Höhenausgleich zwischen der Gruppierstation und einer Beladestation, welche die Lagen übereinanderstapelt und mittels eines zu öffnenden Rollbodens auf einer Palette ablegt.

Eine weitere Palettiervorrichtung ist aus der US 2006/0182545 A1 bekannt. Diese Palettiervorrichtung umfasst zwei aufeinanderfolgende Arbeitsstationen, welche jeweils Artikel auf einer Palette absetzen. Im Bereich einer ersten Arbeitsstation wird die Palette angehalten, woraufhin ein der ersten Arbeitsstation zugeordneter Manipulator Artikel auf der Palette stapelt. Zeitlich hierauf folgend wird die Palette zusammen mit den bereits gestapelten Artikeln in Richtung der zweiten Arbeitsstation bewegt. Dort setzt ein der zweiten Arbeitsstation zugeordneter Manipulator weitere Artikel auf der Palette ab.

Bei solchen und ähnlichen aus dem Stand der Technik bekannten Palettiervorrichtungen ist vorgesehen, dass die jeweilige Transportpalette im Bereich ihres jeweiligen Stapelplatzes verweilt, bis sich sämtliche Lagen an Artikeln in gestapelter Form auf der jeweiligen Transportpalette befinden. Zeitlich hierauf folgend wird die jeweilige Transportpalette zusammen mit ihren gestapelten Lagen an Artikeln aus dem Stapelplatz abgeführt und eine neue Transportpalette in den Stapelplatz eingebracht bzw. in den Stapelplatz eingesetzt, woraufhin auf dieser neuen Transportpalette übereinander gestapelte Lagen an Artikeln abgesetzt werden.

Mit der notwendigen Entnahme der jeweiligen Transportpalette mit den gestapelten Lagen an Artikeln aus dem Stapelplatz und dem notwendigen Einsetzen einer neuen Transportpalette in den Stapelplatz ist ein Zeitverlust bei der Palettierung einhergehend, welcher auch aufgrund eines nach Möglichkeit hohen Durchsatzes bei der Palettierung unerwünscht ist. Insbesondere werden Transportpaletten mit den hierauf gestapelten Lagen an einzelnen Artikeln sehr langsam beschleunigt, um aufgrund einer instabilen Palettenzusammenstellung ein Kippen von Artikeln oder sogar einzelnen Lagen an Artikeln zu vermeiden. Auch hat die Praxis gezeigt, dass bei einer Entnahme der jeweiligen Transportpalette mit den hierauf gestapelten Lagen an Artikeln eine Beschleunigung der Transportpalette mit den hierauf gestapelten Lagen an Artikeln erfolgt, wobei gelegentlich einzelne Artikel ungewollt beschädigt werden.

Als vorrangige Aufgabe der Erfindung kann es daher gesehen werden, ein Verfahren sowie eine Stapelbildungsvorrichtung bereitzustellen, welche die genannten Probleme zumindest in reduziertem Ausmaß aufweisen. Das Verfahren soll zudem einfach umgesetzt werden können. Zudem soll die Stapelbildungsvorrichtung einen einfachen Aufbau besitzen.

Die obige Aufgabe wird durch ein Verfahren nach Anspruch 1 und eine Stapelbildungsvorrichtung nach Anspruch 3 gelöst. Weitere vorteilhafte Ausgestaltungen werden durch die Unteransprüche beschrieben.

Die Erfindung bietet ein verbessertes Verfahren zum Stapeln von Artikeln und/oder Stückgütern an. Die Artikel können beispielsweise durch einzelne Getränkebehälter wie Getränkeflaschen bzw. PET-Getränkeflaschen oder dergleichen gebildet sein. Auch können die Stückgüter durch mehrere bereits zu einem Gebinde oder Tragegebinde zusammengefasste Getränkebehälter gebildet sein. Den für eine Stapelung vorgesehenen Artikeln können wahlweise Umverpackungen zugeordnet sein, über welche jeweils mehrere für eine Stapelung vorgesehene Artikel zu Stückgütern zusammengefasst sind. Mit Umverpackungen können in diesem Zusammenhang bspw. Folienumhüllungen, Karton-Umverpackungen oder dgl. gemeint sein.

Ein erster Schritt des erfindungsgemäßen Verfahrens sieht ein Bereitstellen mindestens einer hier so bezeichneten Transportvorsehung vor. Die mindestens eine Transportvorsehung ist durch mindestens eine Transportpalette gebildet. Die mindestens eine Transportpalette kann hierbei beispielsweise durch Holz oder Kunststoff ausgebildet sein. Denkbar ist hierbei, dass die mindestens eine Transportpalette durch mindestens eine Europalette ausgebildet ist. Wenn also im vorliegenden und nachfolgenden Zusammenhang ganz allgemein von einer Transportvorsehung gesprochen wird, so ist erfindungsgemäß eine Transportpalette gemeint.

Das Verfahren sieht ein Durchführen eines Stapelbildungsprozesses vor, bei welchem auf der mindestens einen Transportvorsehung bzw. auf der mindestens einen Transportpalette Artikel und/oder Stückgüter abgesetzt und gestapelt werden, so dass nach einem Beenden des Stapelbildungsprozesses auf der mindestens einen Transportvorsehung bzw. der Palette wenigstens zwei übereinander gestapelte Lagen an Artikeln und/oder Stückgütern angeordnet sind. Denkbar ist hierbei, dass die Transportvorsehung zusammen mit wenigstens einer bereits auf der Transportvorsehung angeordneten vollständigen Lage an Artikeln und/oder Stückgütern bereitgestellt wird. Im Rahmen des Stapelbildungsprozesses können sodann auf der wenigstens einen bereits auf der Transportvorsehung angeordneten vollständigen Lage an Artikeln und/oder Stückgütern weitere Artikel und/oder Stückgüter abgesetzt und gestapelt werden, womit einhergehend mindestens eine weitere Lage an Artikeln und/oder Stückgütern auf der bereitgestellten Transportvorsehung gebildet wird.

Auch ist vorstellbar, dass die mindestens eine Transportvorsehung bereitgestellt wird, wobei sich bis dahin keine Artikel und/oder Stückgüter auf der mindestens einen bereitgestellten Transportvorsehung befinden bzw. wobei bis dahin keine Artikel und/oder Stückgüter auf der mindestens einen bereitgestellten Transportvorsehung abgesetzt sind. Erst im Rahmen des Stapelbildungsprozesses können sodann bei solchen Ausführungsformen auf der mindestens einen bereitgestellten und bis dahin keine abgesetzten Artikel und/oder Stückgüter tragenden Transportvorsehung Artikel und/oder Stückgüter abgesetzt und gestapelt werden, so dass nach einem Beenden des Stapelbildungsprozesses auf der mindestens einen Transportvorsehung wenigstens zwei übereinander gestapelte Lagen an Artikeln und/oder Stückgütern angeordnet sind.

Es ist vorgesehen, dass die mindestens eine Transportpalette bzw. dass die mindestens eine Transportvorsehung während des Stapelbildungsprozesses durchgehend unterbrechungsfrei fortbewegt wird. Hierzu ist eine nachfolgend noch beschriebene Transporteinrichtung vorgesehen, welche mehrere Transportpaletten bzw. mehrere Transportvorsehungen aufnehmen kann. Sämtliche von der Transporteinrichtung aufgenommenen Transportpaletten bzw. sämtliche von der Transporteinrichtung aufgenommene Transportvorsehungen werden unterbrechungsfrei fortbewegt. Insbesondere kann es sein, dass sämtliche von der Transporteinrichtung aufgenommenen Transportpaletten bzw. dass sämtliche von der Transporteinrichtung aufgenommenen Transportvorsehungen unterbrechungsfrei und mit zumindest näherungsweise gleicher und/oder konstanter Transportgeschwindigkeit fortbewegt werden.

Der Stapelbildungsprozess kann mit einem Aufsetzen einer nachfolgend noch beschriebenen und zur Aufnahme einer unteren Lage an Artikeln und/oder Stückgütern vorgesehenen Schicht bzw. Umverpackung auf die mindestens eine Transportpalette bzw. auf die mindestens eine Transportvorsehung beginnen. Die mindestens eine Transportpalette bzw. die mindestens eine Transportvorsehung wird hierbei spätestens ab dem Aufsetzen der zur Aufnahme einer unteren Lage an Artikeln und/oder Stückgütern vorgesehenen Schicht bzw. Umverpackung auf die mindestens eine Transportpalette bzw. auf die mindestens eine Transportvorsehung unterbrechungsfrei fortbewegt.

Die unterbrechungsfreie Fortbewegung der mindestens einen Transportpalette bzw. der mindestens einen Transportvorsehung kann hierbei vorzugsweise frühestens ab einem Zeitpunkt enden, bei welchem die wenigstens zwei übereinander gestapelten Lagen an Artikeln und/oder Stückgütern vollständig auf der mindestens einen Transportpalette bzw. auf der mindestens einen Transportvorsehung angeordnet sind. In bevorzugten Ausführungsformen kann es sein, dass die mindestens eine Transportpalette bzw. die mindestens eine Transportvorsehung mit den wenigstens zwei auf der mindestens einen Transportpalette bzw. auf der mindestens einen Transportvorsehung übereinander gestapelt angeordneten Lagen an Artikeln und/oder Stückgütern unterbrechungsfrei fortbewegt und in Richtung einer Verladestation geführt wird. Der Stapelbildungsprozess kann daher zu einem Zeitpunkt enden, bei welchem die wenigstens zwei übereinander gestapelten Lagen an Artikeln und/oder Stückgütern vollständig auf der mindestens einen Transportpalette bzw. auf der mindestens einen Transportvorsehung angeordnet sind.

Zudem wird eine jeweilige Transportpalette bzw. eine jeweilige Transportvorsehung unmittelbar zeitlich bei Absetzen wenigstens eines Artikel und/oder wenigstens eines Stückgutes auf diese jeweilige Transportpalette unterbrechungsfrei fortbewegt.

Weiter wird im Rahmen des Stapelbildungsprozesses wenigstens eine übereinander gestapelte Lagen an Artikeln und/oder Stückgütern trennende und insbesondere als Umverpackung ausgebildete Schicht auf der mindestens einen Transportpalette bzw. auf der mindestens einen Transportvorsehung abgesetzt, wobei die mindestens eine Transportpalette bzw. die mindestens eine Transportvorsehung zeitlich während des Absetzens der wenigstens einen übereinander gestapelte Lagen an Artikeln trennenden und insbesondere als Umverpackung ausgebildeten Schicht unterbrechungsfrei fortbewegt wird. Sofern im Rahmen des Stapelbildungsprozesses vorgesehen ist, dass auf der mindestens einen Transportpalette bzw. dass auf der mindestens einen Transportvorsehung wenigstens drei übereinander gestapelte Lagen an Artikeln und/oder Stückgütern angeordnet werden, kann jeder unmittelbar benachbarten Lage an Artikeln eine die jeweiligen Lagen an Artikeln und/oder Stückgütern trennende und insbesondere als Umverpackung ausgebildete Schicht zwischengeordnet werden.

In diversen Ausführungsformen kann es sein, dass auf der mindestens einen Transportpalette bzw. auf der mindestens einen Transportvorsehung abzusetzende Artikel und/oder abzusetzende Stückgüter mittels einer unterbrechungsfreien und vorzugsweise in mehreren parallelen Reihen ausgebildeten Bewegung dargeboten werden. Es kann hierbei sein, dass in einer ersten Reihe der mehreren parallelen Reihen durch Getränkebehälter ausgebildete Artikel bewegt werden, welche eine erste Getränkesorte aufgenommen haben.

Weiter kann es sein, dass in einer zweiten Reihe der mehreren Reihen durch Getränkebehälter ausgebildete Artikel bewegt werden, welche eine zweite Getränkesorte aufgenommen haben, die sich von der ersten Getränkesorte unterscheidet. Jeweilige Getränkebehälter mit der ersten aufgenommenen Getränkesorte und jeweilige Getränkebehälter mit der zweiten aufgenommenen Getränkesorte können ggf. auf einer gemeinsamen Transportpalette bzw. auf einer gemeinsamen Transportvorsehung abgesetzt werden, bis auf der gemeinsamen Transportpalette bzw. auf der gemeinsamen Transportvorsehung wenigstens zwei übereinander gestapelte Lagen an Artikeln und/oder Stückgütern angeordnet sind, welche wenigstens zwei übereinander gestapelte Lagen an Artikeln und/oder Stückgütern jeweils Getränkebehälter umfassen, welche die erste Getränkesorte aufgenommen haben und zudem jeweils Getränkebehälter umfassen, welche die zweite Getränkesorte aufgenommen haben. Transportpaletten mit solchen Lagen an Artikeln bzw. mit solchen Lagen an Getränkebehältern werden in der Praxis oftmals auch als Mischpaletten bezeichnet.

Auch kann es sein, dass im Rahmen des Stapelbildungsprozesses für jede der wenigstens zwei übereinander gestapelten Lagen an Artikeln und/oder Stückgütern in zeitlich aufeinanderfolgenden Schritten jeweils mehrere Artikel und/oder Stückgüter auf einer jeweiligen Transportpalette abgesetzt werden, wobei die jeweilige Transportpalette spätestens beginnend mit einem Aufsetzen für eine erste untere Lage an Artikeln und/oder Stückgütern vorgesehener Artikel und/oder Stückgüter auf die Transportpalette und wenigstens bis zum Fertigstellen einer zuoberst vorgesehenen Lage an Artikeln und/oder Stückgütern auf der jeweiligen Transportpalette unterbrechungsfrei fortbewegt wird.

Weiter wird im Rahmen des Stapelbildungsprozesses eine jeweilige Ist-Position einer jeweiligen Transportpalette bzw. einer jeweiligen Transportvorsehung sensorisch festgestellt und/oder über den Zeitverlauf sensorisch überwacht. Hierbei können Artikel und/oder Stückgüter abgestimmt auf die sensorisch festgestellte Ist-Position und/oder abgestimmt auf die über den Zeitverlauf vorgesehene sensorische Überwachung der jeweiligen Ist-Position auf der jeweiligen Transportpalette bzw. auf der jeweiligen Transportvorsehung abgesetzt werden. Auch ist denkbar, dass eine Bewegungsgeschwindigkeit der jeweiligen Transportpalette bzw. der jeweiligen Transportvorsehung unter Berücksichtigung der sensorisch festgestellten Ist-Position und/oder unter Berücksichtigung der über den Zeitverlauf vorgesehenen sensorischen Überwachung der jeweiligen Ist-Position geregelt wird.

Erfindungsgemäß wird die mindestens eine Transportvorsehung durch mindestens eine Transportpalette ausgebildet, auf welcher mindestens einen Transportpalette im Rahmen des Stapelbildungsprozesses Artikel und/oder Stückgüter abgesetzt und gestapelt werden, so dass nach einem Beenden des Stapelbildungsprozesses auf der mindestens einen Transportpalette wenigstens zwei übereinander gestapelte Lagen an Artikeln und/oder Stückgütern angeordnet sind. Die mindestens eine Transportpalette wird während des Stapelbildungsprozesses durchgehend unterbrechungsfrei fortbewegt.

Auch kann es sein, dass die mindestens eine Transportvorsehung nicht erfindungsgemäß durch mindestens ein Transportband ausgebildet wird, auf welchem mindestens einen Transportband im Rahmen des Stapelbildungsprozesses Artikel und/oder Stückgüter abgesetzt und gestapelt werden, so dass nach einem Beenden des Stapelbildungsprozesses auf dem mindestens einen Transportband wenigstens zwei übereinander gestapelte Lagen an Artikeln und/oder Stückgütern angeordnet sind. Ein umlaufend angetriebenes Fördertrum des mindestens einen Transportbandes kann während des Stapelbildungsprozesses zumindest zeitweise und vorzugsweise durchgehend unterbrechungsfrei umlaufend fortbewegt werden.

Wenn hier von einem Fördertrum gesprochen wird, so ist dies insbesondere in Unterscheidung von einem Leertrum eines endlos umlaufenden Förder- oder Transportbandes zu verstehen, wobei das Fördertrum eine obere Auflageebene zur Verfügung stellt, während das Leertrum eines solchen endlos umlaufenden Förder- oder Transportbandes in einer unterhalb der Auflageebene befindlichen Höhe zurückläuft.

Denkbar ist weiter, dass die mindestens eine Transportvorsehung nicht erfindungsgemäß durch mindestens ein fahrerloses Transportfahrzeug ausgebildet wird, auf welchem mindestens einen fahrerlosen Transportfahrzeug im Rahmen des Stapelbildungsprozesses Artikel und/oder Stückgüter abgesetzt und gestapelt werden, bis auf dem mindestens einen fahrerlosen Transportfahrzeug wenigstens zwei übereinander gestapelte Lagen an Artikeln und/oder Stückgüter angeordnet sind. Das mindestens eine fahrerlose Transportfahrzeug kann während des Stapelbildungsprozesses zumindest zeitweise und vorzugsweise durchgehend unterbrechungsfrei fortbewegt werden.

Weiter kann es sein, dass die mindestens eine Transportvorsehung nicht erfindungsgemäß von wenigstens einem Läufer mindestens eines Linearmotors ausgebildet wird, auf welchem wenigstens einen Läufer im Rahmen des Stapelbildungsprozesses Artikel und/oder Stückgüter abgesetzt und gestapelt werden, bis auf dem wenigstens einen Läufer wenigstens zwei übereinander gestapelte Lagen an Artikeln und/oder Stückgütern angeordnet sind. Hierbei kann der wenigstens eine Läufer während des Stapelbildungsprozesses zumindest zeitweise und vorzugsweise durchgehend unterbrechungsfrei fortbewegt werden.

Die Erfindung betrifft darüber hinaus eine Stapelbildungsvorrichtung nach Anspruch 3. Die Stapelbildungsvorrichtung umfasst wenigstens eine Transporteinrichtung zur Bewegung von Transportpaletten bzw. zur Bewegung mindestens einer Transportvorsehung. Die wenigstens eine Transporteinrichtung kann beispielsweise mindestens einen umlaufend geführten Riemen- und/oder Kettentrieb umfassen, mittels welchen umlaufend geführten Riemen- und/oder Kettentriebes die wenigstens eine Transporteinrichtung Transportpaletten bewegen kann. Auch ist beispielsweise vorstellbar, dass die wenigstens eine Transporteinrichtung mindestens ein fahrerloses Transportfahrzeug umfasst, mittels welchen mindestens einen fahrerlosen Transportfahrzeugs die wenigstens eine Transporteinrichtung Transportpaletten bzw. Transportvorsehungen bewegen kann. Auch kann es sein, dass die wenigstens eine Transporteinrichtung mindestens einen elektromagnetischen Direktantrieb umfasst, mittels welchen mindestens einen elektromagnetischen Direktantriebes die wenigstens eine Transporteinrichtung Transportpaletten bzw. Transportvorsehungen bewegen kann.

Weiter umfasst die Stapelbildungsvorrichtung mindestens einen Manipulator, welcher zum Herstellen wenigstens zweier übereinander gestapelter Lagen an Artikeln und/oder Stückgütern auf einer jeweiligen über die wenigstens eine Transporteinrichtung bewegten Transportpalette bzw. Transportvorsehung ausgebildet ist. Der mindestens eine Manipulator kann zum Herstellen der wenigstens zwei übereinander gestapelten Lagen an Artikeln und/oder Stückgütern beispielsweise wenigstens einen Mehrachsroboter und/oder wenigstens ein Portalsystem und/oder wenigstens einen Deltakinematik-Roboter umfassen.

Es kann sein, dass die Stapelbildungsvorrichtung einen Zulauf umfasst, welcher zum Darbieten kontinuierlich bewegter Artikel und/oder kontinuierlich bewegter Stückgüter an den mindestens einen Manipulator ausgebildet ist, welche kontinuierlich bewegten und über den Zulauf dargebotenen Artikel und/oder Stückgüter zum Herstellen der wenigstens zwei übereinander gestapelten Lagen an Artikeln und/oder Stückgütern vorgesehen sind. Der Zulauf kann wenigstens eine Horizontalfördereinrichtung umfassen sowie mehrere Gassenbleche, über welche wenigstens eine Horizontalfördereinrichtung und über welche mehreren Gassenbleche die Artikel und/oder Stückgüter in mehreren parallelen Reihen kontinuierlich bewegt und in mehreren parallelen Reihen dem mindestens einen Manipulator dargeboten werden können.

Bewährt haben sich Ausführungsformen, bei welchen der erste Manipulator und der zweite Manipulator auf gegenüberliegenden Seiten der wenigstens einen Transporteinrichtung angeordnet sind.

Es kann sein, dass der zweite Manipulator Laschen einer jeweiligen die wenigstens zwei übereinander gestapelten Lagen an Artikeln trennenden und als Umverpackung ausgebildeten Schicht einschlagen und/oder auffalten kann. Insbesondere kann der zweite Manipulator derart ausgebildet sein, dass der zweite Manipulator Laschen einer jeweiligen die wenigstens zwei übereinander gestapelten Lagen an Artikeln trennenden und als Umverpackung ausgebildeten Schicht während einer in Richtung einer jeweiligen Transportpalette bzw. in Richtung einer jeweiligen Transportvorsehung orientierten Überführungsbewegung einschlagen und/oder auffalten kann.

Auch umfasst die Stapelbildungsvorrichtung mindestens eine Sensorik, welche mindestens eine Sensorik zum Feststellen einer jeweiligen Ist-Position einer jeweiligen über die wenigstens eine Transporteinrichtung bewegten Transportpalette bzw. einer jeweiligen über die wenigstens eine Transporteinrichtung bewegten Transportvorsehung ausgebildet ist. Alternativ oder ergänzend kann es sein, dass die mindestens eine Sensorik zum Überwachen einer jeweiligen Ist-Position über den Zeitverlauf einer jeweiligen über die wenigstens eine Transporteinrichtung bewegten Transportpalette bzw. einer jeweilige über die wenigstens eine Transporteinrichtung bewegten Transportvorsehung ausgebildet ist.

Hierbei kann vorgesehen sein, dass der mindestens eine Manipulator die wenigstens zwei übereinander gestapelten Lagen an Artikeln und/oder Stückgütern auf einer jeweiligen über die wenigstens eine Transporteinrichtung bewegten Transportpalette bzw. einer jeweiligen über die wenigstens eine Transporteinrichtung bewegten Transportvorsehung unter Berücksichtigung der jeweiligen über die mindestens eine Sensorik festgestellten und/oder über die mindestens eine Sensorik über den Zeitverlauf überwachten Ist-Position herstellen kann. Alternativ hierzu oder ergänzend hierzu kann es sein, dass eine via die wenigstens eine Transporteinrichtung zur Bewegung der jeweiligen Transportpalette bzw. zur Bewegung der jeweiligen Transportvorsehung ausgebildete Transportgeschwindigkeit unter Berücksichtigung der jeweiligen über die mindestens eine Sensorik festgestellten und/oder über die mindestens eine Sensorik über den Zeitverlauf überwachten Ist-Position regelbar ist. Die mindestens eine Sensorik kann durch mindestens eine optische Sensorik und insbesondere durch mindestens ein Kamerasystem ausgebildet sein.

Die einzelnen Artikel einer jeweiligen Lage an Artikeln können bspw. jeweils als Getränkebehälter ausgebildet sein. Eine Mehrzahl an Artikeln einer jeweiligen Lage an Artikeln steht normalerweise auf einer die jeweiligen aufeinander gestapelten Lagen an Artikeln voneinander trennenden Schicht, die bspw. durch eine Umverpackung gebildet sein kann. Die Umverpackungen besitzen je nach Ausführungsform bspw. über ihren vollständigen Umfangsverlauf mehrere Laschen, die über einen geeigneten Manipulator aufgerichtet wurden und in der aufgerichteten Position Artikel bzw. Getränkebehälter einer jeweiligen Lage an Artikeln formschlüssig halten.

In der Praxis werden derartige Umverpackungen auch als Tray bezeichnet. Auch sind Ausführungsformen vorstellbar, bei welchen die aufeinander gestapelte Lagen an Artikeln trennenden Schichten keine Laschen besitzen, die eingeschlagen wurden bzw. in eine aufrechte Position überführt wurden. Solche Umverpackungen bilden weiterhin eine ebene Standfläche für Artikel einer jeweiligen Lage an Artikeln aus und werden in der Praxis oftmals auch als Pad oder Zwischenlage bezeichnet. Derartige Umverpackungen mit oder ohne seitliche Laschen, Pads oder Zwischenlagen können bspw. aus Karton bestehen.

Durch die zwischen benachbarte Lagen an Artikeln eingebrachten Schichten bzw. Umverpackungen besitzt die Palettenzusammenstellung eine hohe Stabilität, und dies selbst bei einer Vielzahl an übereinander gestapelten Lagen an Artikeln.

Die Artikel bzw. Getränkebehälter einer jeweiligen Lage an Artikeln werden normalerweise lediglich mittels einer jeweiligen Umverpackung formschlüssig gehalten. Untereinander sind die Artikel bzw. Getränkebehälter nicht miteinander verbunden. In weiteren Ausführungsformen kann vorgesehen sein, dass mehrere Artikel bzw. Getränkebehälter einer jeweiligen Lage an Artikeln zu einem Gebinde oder Tragegebinde zusammengefasst sind und hierbei ein jeweiliges Stückgut bilden.

Nachfolgend werden aufeinander folgende Schritte eines Verfahrens zur Herstellung von Palettenzusammenstellungen näher erläutert, wie sie mit einer erfindungsgemäßen Stapelbildungsvorrichtung übereinander gestapelt werden können. Die Stapelbildungsvorrichtung kann bspw. als Palettiervorrichtung ausgebildet sein. Bestandteil der Stapelbildungsvorrichtung ist ein Zulauf, über den Artikel bzw. Getränkebehälter zunächst im ungeordneten Massenstrom bewegt bzw. transportiert werden. Der Zulauf umfasst bspw. mehrere parallel zueinander orientierte Gassenbleche. Über eine als Bestandteil des Zulaufs ausgebildete und die Artikel bzw. Getränkebehälter zunächst im ungeordneten Massenstrom bewegende bzw. transportierende Horizontalfördereinrichtung werden die einzelnen Artikel bzw. Getränkebehälter sodann zwischen die Gassenbleche bewegt bzw. transportiert, so dass die Artikel bzw. Getränkebehälter zwischen den mehreren Gassenblechen in mehreren parallel zueinander orientierten Reihen bewegt bzw. transportiert werden.

Ein Erfassungsbereich eines als Bestandteil der Stapelbildungsvorrichtung ausgebildeten Manipulators erstreckt sich über einen Bereich des Zulaufs mit den Gassenblechen. Somit kann der Manipulator aus dem Bereich des Zulaufs mit den Gassenblechen zumindest näherungsweise zeitgleich mehrere bereits in parallelen Reihen bewegte Artikel bzw. zumindest näherungsweise zeitgleich mehrere bereits in parallelen Reihen bewegte Getränkebehälter vom Zulauf entgegennehmen. Der Manipulator kann beispielsweise als Mehrachsroboter und/oder als Portalroboter ausgebildet sein.

Weiterhin umfasst die Stapelbildungsvorrichtung eine Transporteinrichtung, die mehrere durch Transportpaletten gebildete Transportvorsehungen beabstandet zueinander in einer definierten Förderrichtung bewegt. Die Transporteinrichtung ist derart positioniert, dass der Manipulator bereits vom Zulauf entgegengenommene Artikel oder Getränkebehälter zeitlich oder zumindest näherungsweise zeitgleich auf einer hierfür vorgesehenen und mittels der Transporteinrichtung in Förderrichtung bewegten Transportvorsehung bzw. Transportpalette absetzen kann. Über die Transporteinrichtung wird somit eine zur Aufnahme von Artikeln bzw. Getränkebehältern vorgesehene Transportpalette in den Arbeitsbereich des Manipulators bewegt und nach vollständigem und nachfolgend noch detailliert beschriebenem Fertigstellen einer Palettenzusammenstellung aus dem Arbeitsbereich des Manipulators geführt.

In der hier beschriebenen Förder- und Handhabungssituation wurden bereits in einem zeitlich vorausgehenden Schritt mehrere vom Zulauf entgegengenommene Artikel oder Getränkebehälter auf der Transportpalette abgesetzt und bilden eine noch nicht fertig gestellte Lage an Artikeln auf der Transportpalette aus. Die bereits auf der Transportpalette abgesetzten Artikel oder Getränkebehälter stehen über eine bereits auf der Transportpalette angeordnete Schicht bzw. Umverpackung mittelbar auf der Transportpalette. Um die Schicht bzw. Umverpackung an die Transportpalette zu überführen, umfasst die Stapelbildungsvorrichtung einen weiteren Manipulator. Der erste Manipulator und der weitere Manipulator befinden sich vorzugsweise auf gegenüberliegenden Seiten der Transporteinrichtung.

Weiter ist ein Stapel an Schichten, Zwischenlagen oder Umverpackungen vorgesehen. Der weitere Manipulator kann eine jeweilige zuoberst auf dem Stapel angeordnete Schicht oder Umverpackung vom Stapel entgegennehmen, hierauf seitliche Laschen einer jeweiligen Schicht bzw. Umverpackung in eine aufrechte Orientierung überführen und die jeweilige Schicht oder Umverpackung mit ihren in die jeweilige aufrechte Orientierung überführten Laschen sodann auf einer jeweiligen hierfür vorgesehenen und mittels der Transporteinrichtung bewegten Transportpalette absetzen. Auch der weitere Manipulator kann beispielsweise als Mehrachsroboter oder als Portalroboter ausgebildet sein.

Um die Transportpaletten in der erwähnten Förderrichtung zu bewegen, kann die Transporteinrichtung beispielsweise mindestens einen umlaufend geführten Riemen und/oder mindestens einen umlaufend bewegten Kettentrieb umfassen. Auch ist denkbar, dass die Transporteinrichtung zur Bewegung von Transportpaletten in Förderrichtung mindestens ein fahrerloses Transportfahrzeug und/oder eine induktive Leitlinie bzw. eine induktive Spurführung besitzt. In weiteren Ausführungsformen kann die Transporteinrichtung zur Bewegung der Transportpaletten in Förderrichtung mindestens einen elektromagnetischen Direktantrieb besitzen.

Die als Bestandteil des Zulaufs und zur Bewegung von Artikeln bzw. Getränkebehältern in mehreren parallelen Reihen vorgesehene Horizontalfördereinrichtung, die Transporteinrichtung sowie der erste Manipulator und der weitere Manipulator stehen sinnvollerweise in Wirkverbindung mit einer Steuer- und/oder Regeleinrichtung bzw. werden von dieser gesteuert.

Über diese Steuer- und/oder Regeleinrichtung wird die als Bestandteil des Zulaufs ausgebildete und zur Bewegung von Artikeln bzw. Getränkebehältern vorgesehene Horizontalfördereinrichtung derart angesteuert, dass die als Bestanteil des Zulaufs ausgebildete und zur Bewegung von Artikeln bzw. Getränkebehältern ausgebildete Horizontalfördereinrichtung die bereits zwischen den Gassenblechen angeordneten Artikel bzw. Getränkebehälter über den Zeitverlauf mit zumindest näherungsweise gleichbleibender Fördergeschwindigkeit bewegt. Die bereits zwischen den Gassenblechen befindlichen und in parallelen Reihen bewegten Artikel bzw. Getränkebehälter stehen somit zu keiner Zeit still und werden mittels der als Bestandteil des Zulaufs ausgebildeten Horizontalfördereinrichtung unterbrechungsfrei und vorzugsweise mit gleichbleibender Fördergeschwindigkeit bewegt. Ein Transport der bereits zwischen den Gassenblechen befindlichen Artikel oder Getränkebehälter erfolgt hierbei in einer Richtung, welche parallel zur Förderrichtung der Transporteinrichtung orientiert ist.

Weiter wird über die Steuer- und/oder Regeleinrichtung die Transporteinrichtung derart angesteuert, dass die Transporteinrichtung die Transportpaletten spätestens mit dem jeweiligen Eintritt in den Arbeitsbereich der ersten Manipulators und/oder in den Arbeitsbereich des weiteren Manipulators und wenigstens bis zum vollständigen Fertigstellen einer jeweiligen Palettenzusammenstellung bzw. wenigstens bis zum Fertigstellen einer auf der jeweiligen Transportpalette zuoberst anzuordnenden Lage an Artikeln unterbrechungsfrei fortbewegt. Da die Transportpaletten hierdurch während eines Stapelbildungsprozesses zu keiner Zeit stillstehen, kann das Herstellen einer Palettenzusammenstellung mit hohem Durchsatz erfolgen. Auch ist es nicht notwendig, eine stillstehende Transportpalette mit aufstehenden Artikeln bzw. Getränkebehältern zu beschleunigen, wodurch bei bereits bekannten Palettiervorrichtungen einzelne auf einer Transportpalette aufstehende Artikel bzw. Getränkebehälter ungewollt kippen können. Mittels der Stapelbildungsvorrichtung können daher Palettenzusammenstellungen mit hoher Zuverlässigkeit hergestellt werden.

Normalerweise werden die Artikel bzw. Getränkebehälter über den Zulauf weiter bewegt, wobei ein jeweiliger vorderer Artikel bzw. ein jeweiliger vorderer Getränkebehälter einer jeweiligen zwischen den Gassenblechen bewegten Reihe an Artikeln oder Getränkebehältern hierbei mit einem optional vorhandenen Anlagebalken in Oberflächenkontakt geraten kann. Dieser Anlagebalken ist sinnvollerweise bewegbar ausgebildet und kann entlang des Zulaufs verfahren werden. Die Bewegung des Anlagebalkens erfolgt hierbei auf Veranlassung der Steuer- und/oder Regeleinrichtung und ist auf eine jeweilige Entgegennahme von Artikeln bzw. von Getränkebehältern, welche jeweilige Entgegennahme über den ersten Manipulator erfolgt, abgestimmt. So sind Artikel bzw. Getränkebehälter entsprechend der Position des Anlagebalkens derart entlang einer durch den Zulauf für Artikel bzw. Getränkebehälter vorgesehenen Bewegungsrichtung ausgerichtet, dass sich die Artikel bzw. Getränkebehälter im Hinblick auf die durch den Zulauf für Artikel bzw. Getränkebehälter vorgesehenen Bewegungsrichtung an einer jeweiligen vorbestimmten Position befinden, in welcher jeweiligen vorbestimmten Position der erste Manipulator die jeweiligen Artikel oder Getränkebehälter vom Zulauf abholt.

Die vom Zulauf über den ersten Manipulator bereits entgegengenommenen Artikel bzw. Getränkebehälter werden zunächst vom ersten Manipulator getragen und werden mittels des Manipulators auf der hierfür vorgesehenen Transportpalette bzw. auf der darauf befindlichen Schicht oder Umverpackung abgesetzt. Wenn die unterste Lage an Artikeln bereits vollständig auf der hierfür vorgesehenen Transportpalette angeordnet ist, kann die zuvor noch in Warteposition befindliche Schicht oder Umverpackung durch den weiteren Manipulator auf die bereits auf der Transportpalette angeordnete untere Lage an Artikeln aufgesetzt werden.

Hierbei wird die vom Stapel abgezogene Schicht bzw. Umverpackung weiter in Richtung der hierfür vorgesehenen Transportpalette bewegt, bis sich die bereits vom Stapel abgezogene Schicht bzw. Umverpackung oberhalb der bereits auf der Transportpalette abgesetzten unteren Lage an Artikeln befindet.

Während die Schicht bzw. Umverpackung auf die bereits auf der Transportpalette angeordnete untere Lage an Artikeln aufgesetzt wird, wird die Transportpalette sowie die bereits auf der Transportpalette abgesetzte untere Lage an Artikeln unterbrechungsfrei fortbewegt und steht normalerweise zu keinem Zeitpunkt still. Die unterbrechungsfreie Bewegung der Transportpalette erfolgt, wie vorhergehend bereits beschrieben, über die Transporteinrichtung und auf Veranlassung der Steuer- und/oder Regeleinrichtung.

Eine sinnvolle Verfahrensvariante sieht vor, dass zwischen den Gassenblechen befindliche Artikel bzw. Getränkebehälter zusammen mit dem Anlagebalken bewegt werden, wobei der Anlagebalken während der Bewegung in Oberflächenkontakt mit zuvorderst befindlichen Artikeln bzw. mit zuvorderst befindlichen Getränkebehältern einer jeweiligen zwischen den Gassenblechen bewegten Reihe an Artikeln bzw. Reihe an Getränkebehältern bleibt. Zunächst befinden sich jeweilige zur Überführung an die Transportpalette vorgesehene Artikel oder Getränkebehälter in einer Position, in welcher der erste Manipulator Artikel oder Getränkebehälter vom Zulauf entgegennehmen und anschließend in Richtung der Transporteinrichtung bzw. in Richtung der jeweiligen mittels der Transporteinrichtung bewegten Transportpalette bewegen kann.

Nach erfolgter Entgegennahme der jeweiligen Artikel bzw. Getränkebehälter vom Zulauf werden diese sodann auf der bereits auf der Transportpalette angeordneten Schicht bzw. auf der bereits auf der Transportpalette angeordneten Umverpackung abgesetzt. Hierdurch wird eine noch nicht vollständige bzw. eine bis dahin noch nicht fertig gestellte mittlere Lage an Artikeln auf der jeweiligen Transportpalette ausgebildet. Anschließend wird erneut eine zuoberst auf dem Stapel befindliche Schicht bzw. Umverpackung vom Stapel abgezogen. Während des Überführens bzw. während des Absetzens der Artikel bzw. Getränkebehälter auf der Schicht bzw. Umverpackung wird die Transportpalette über der Transporteinrichtung unterbrechungsfrei fortbewegt, so dass die Transportpalette zu keinem Zeitpunkt stillsteht.

Währenddessen wurden vom Manipulator erneut für die mittlere Lage an Artikeln vorgesehene Artikel oder Getränkebehälter vom Zulauf entgegengenommen und auf der bereits mittels des zweiten Manipulators auf der Transportpalette abgesetzten Schicht bzw. Umverpackungen abgesetzt, so dass sich nun eine vollständige mittlere Lage an Artikeln auf der Transportpalette befindet. Die vom Stapel nun vollständig abgezogene Schicht bzw. Umverpackung wird dann weiter in Richtung der Transportpalette bewegt, welche die vollständige mittlere Lage an Artikeln aufgenommen hat. Während des Absetzens der für die mittlere Lage an Artikeln vorgesehenen Artikel bzw. Getränkebehälter auf der Transportpalette wird die Transportpalette über die Transporteinrichtung weiterhin fortbewegt, so dass die Transportpalette zu keinem Zeitpunkt stillsteht.

Durch die kontinuierliche Bewegung von Artikeln bzw. Getränkebehältern über den Zulauf werden die Artikel bzw. Getränkebehälter zwischen den Gassenblechen fortbewegt und gelangen in eine Position, aus welcher der erste Manipulator die jeweiligen Artikel bzw. Getränkebehälter zum Herstellen einer oberen Lage an Artikeln vom Zulauf abholen oder entgegennehmen kann.

Dabei werden die für eine obere Lage an Artikeln vorgesehenen Artikel bzw. Getränkebehälter zunächst auf der hierfür vorgesehenen Transportpalette abgesetzt und bilden somit eine noch nicht vollständige obere Lage an Artikeln auf der Transportpalette aus. Dann wird erneut eine zuoberst auf dem Stapel angeordnete Schicht bzw. Umverpackung vom Stapel abgezogen und über den zweiten Manipulator in Richtung der Transportpalette bzw. in Richtung der Transporteinrichtung bewegt. Während des Absetzens der für die obere Lage an Artikeln vorgesehenen Artikel bzw. Getränkebehälter auf der Transportpalette wird die Transportpalette kontinuierlich fortbewegt und steht zu keiner Zeit still.

Durch die kontinuierliche Bewegung der zwischen den Gassenblechen des Zulaufs angeordneten Artikel bzw. Getränkebehälter stehen Artikel bzw. Getränkebehälter zur Entgegennahme für den ersten Manipulator bereits bereit, wenn der erste Manipulator nach Absetzen von Artikeln bzw. Getränkebehältern auf der Transportpalette den Zulauf erneut erreicht. Nach erneuter Entgegennahme von Artikeln bzw. Getränkebehältern vom Zulauf werden diese Artikel bzw. Getränkebehälter auf der Transportpalette abgesetzt und bilden sodann die vollständige obere Lage an Artikeln entsprechend den obigen Ausführungen. Die Transportpalette bildet zusammen mit den hierauf abgesetzten Schichten bzw. Umverpackungen sowie den hierauf abgesetzten Lagen an Artikeln eine fertige Palettenzusammenstellung und kann mittels der Transporteinrichtung aus dem Arbeitsbereich des ersten Manipulators bewegt werden. Beginnend mit dem Eintritt in den Arbeitsbereich des ersten Manipulators und/oder des zweiten oder weiteren Manipulators wird die Transportpalette bis zeitlich nach dem Fertigstellen der vollständigen Palettenzusammenstellung unterbrechungsfrei bewegt und steht zu keinem Zeitpunkt still.

Wahlweise kann der Artikelzulauf unterschiedlich ausgeführt sein. In diesem Zusammenhang kann auch die Ausbildung des Zulaufs sowie der mit der Transportpalette zu bildenden Palettenzusammenstellung unterschiedlich ausgebildet sein. Oben wurde beschrieben, wie identische Artikel bzw. Getränkebehälter zunächst im ungeordneten Massenstrom bewegt und sodann ohne vorhergehende Einteilung als parallele Reihen zwischen den Gassenblechen bewegt werden.

In einer alternativen Ausgestaltung des Zulaufs können die Artikel bzw. Getränkebehälter vor ihrer Bewegung in parallelen Reihen bzw. vor ihrem Eintritt in mittels der Gassenbleche gebildeten Gassen geordnet werden, so dass sich in einer jeweiligen über ein paar unmittelbar benachbarter Gassenbleche gebildeten Gasse lediglich Artikel oder Getränkebehälter befinden, die hinsichtlich ihres Inhalts, ihrer Art und/oder hinsichtlich ihrer geometrischen Form identisch ausgebildet sind.

In der Praxis kann hierbei vorgesehen sein, dass zwischen einem ersten Paar an unmittelbar benachbarten Gassenblechen eine erste Reihe an Artikeln bewegt wird, welche Artikel der ersten Reihe ausschließlich durch eine erste Getränkesorte beinhaltende Getränkebehälter ausgebildet sind. Zudem kann es sein, dass zwischen einem zweiten Paar an unmittelbar benachbarten Gassenblechen eine zweite Reihe an Artikeln bewegt wird, welche Artikel der zweiten Reihe ausschließlich durch eine zweite Getränkesorte beinhaltende Getränkebehälter ausgebildet sind, welche zweite Getränkesorte sich von der ersten Getränkesorte unterscheidet.

Weiter kann es sein, dass zwischen einem dritten Paar an unmittelbar benachbarten Gassenblechen eine dritte Reihe an Artikeln bewegt wird, welche Artikel der dritten Reihe ausschließlich durch eine dritte Getränkesorte enthaltende Getränkebehälter ausgebildet sind, welch dritte Getränkesorte sich von der ersten Getränkesorte und der zweiten Getränkesorte unterscheidet. Mittels der nachfolgenden Entgegennahme von Artikeln bzw. Getränkebehältern mit unterschiedlichen Getränkesorten lassen sich durch die Schritte gemäß vorhergehender Beschreibung jeweils Palettenzusammenstellungen herstellen, die Artikel bzw. Getränkebehälter mit unterschiedlichen Getränkesorten aufweisen. Solche Palettenzusammenstellungen werden in der Praxis als sogenannte Mischpaletten bezeichnet.

Nachfolgend werden nochmals zeitlich aufeinanderfolgende Verfahrensschritte zur Durchführung des erfindungsgemäßen Verfahrens und zur Ausbildung von Palettenzusammenstellungen erläutert. So wird in einem ersten Schritt eine Transportpalette in einen Arbeitsbereich eines Manipulators oder mehrerer Manipulatoren bewegt. Im ersten Verfahrensschritt wird zudem eine Umverpackung auf der Transportpalette abgesetzt und eine untere Lage an Artikeln auf der sodann auf der Transportpalette befindlichen Umverpackung angeordnet. Während des Absetzens der Umverpackung sowie während des Absetzens der unteren Lage an Artikeln wird die Transportpalette kontinuierlich fortbewegt und steht zu keiner Zeit still.

In einem folgenden Verfahrensschritt wird eine weitere Umverpackung von dem Stapel abgezogen und auf der bereits auf der Transportpalette befindlichen unteren Lage an Artikeln angeordnet. Auf der nun auf der unteren Lage an Artikeln angeordneten Umverpackung wird eine weitere bzw. mittlere Lage an Artikeln abgesetzt. Die einzelnen Artikel bzw. Getränkebehälter dieser mittleren Lage an Artikeln werden erneut vom Zulauf entgegengenommen. Während des Abziehens der weiteren Umverpackung vom Stapel, während des Anordnens der weiteren Umverpackung auf der bereits auf der Transportpalette befindlichen unteren Lage an Artikeln sowie während des Absetzens der weiteren bzw. mittleren Lage an Artikeln auf der Umverpackung steht die Transportplatte zu keiner Zeit still und wird unterbrechungsfrei bzw. kontinuierlich fortbewegt.

In einem zeitlich folgenden weiteren oder dritten Verfahrensschritt wird eine weitere Umverpackung von dem Stapel abgezogen und auf der bereits auf der Transportpalette befindlichen mittleren Lage an Artikeln angeordnet. Auf der nun auf der mittleren Lage an Artikeln angeordneten Umverpackung wird eine weitere obere Lage an Artikeln abgesetzt. Die einzelnen Artikel bzw. Getränkebehälter der oberen Lage an Artikeln werden erneut vom Zulauf entgegengenommen. Während des Abziehens der weiteren Umverpackung vom Stapel, während des Anordnens der weiteren Umverpackung auf der bereits auf der Transportpalette befindlichen mittleren Lage an Artikeln sowie während des Absetzens der oberen Lage an Artikeln auf der Umverpackung steht die Transportpalette zu keiner Zeit still und wird unterbrechungsfrei bzw. kontinuierlich fortbewegt.

Zeitlich nach dem Absetzen der oberen Lage an Artikeln auf der Umverpackung ist die Palettenzusammenstellung vollständig hergestellt. Im nachfolgenden vierten Verfahrensschritt wird die vollständige hergestellte Plattenzusammenstellung sodann in Richtung einer Verladestation bewegt.

Bei einer weiteren Ausführungsform der erfindungsgemäßen Stapelbildungsvorrichtung ist ebenfalls ein Zulauf vorgesehen, über den Artikel oder Getränkebehälter zunächst im ungeordneten Massenstrom bewegt bzw. transportiert werden. Weiterhin sind mehrere parallel zueinander orientierte Gassenbleche vorgesehen, zwischen denen die Artikel bzw. Getränkebehälter in mehreren parallel zueinander orientierten Reihen bewegt werden. Zudem kann ein Anlagebalken vorgesehen sein, dessen Funktionsweise oben bereits beschrieben wurde. Zudem ist bei der Stapelbildungsvorrichtung der bereits beschriebene erste Manipulator vorgesehen, dessen Erfassungsbereich sich über einen Bereich des Zulaufs mit den darin befindlichen Gassenblechen erstreckt. Der erste Manipulator kann somit die in parallelen Reihen bewegten Artikel bzw. Getränkebehälter vom Zulauf entgegennehmen.

Bestandteil einer nicht erfindungsgemäßen Stapelbildungsvorrichtung ist zudem eine Transportvorsehung, die wahlweise als fahrerloses Transportfahrzeug ausgebildet sein kann oder ein solches fahrerloses Transportfahrzeug umfassen kann. Die Transportvorsehung ist zudem mit einer Steuer- und/oder Regeleinrichtung gekoppelt, die mit dem fahrerlosen Transportfahrzeug bzw. mit der Transportvorsehung kommuniziert und eine unterbrechungsfreie Bewegung für das fahrerlose Transportfahrzeug bzw. für die Transportvorsehung vorgibt.

In der hier erläuterten nicht erfindungsgemäßen Prozessphase kann die Transportvorsehung bzw. das fahrerlose Transportfahrzeug auf Veranlassung und durch Steuerungsbefehle der Steuer- und/oder Regeleinrichtung bereits in den Erfassungsbereich des ersten Manipulators bewegt worden sein, so dass der erste Manipulator Artikel bzw. Getränkebehälter auf der Transportvorsehung bzw. auf dem fahrerlosen Transportfahrzeug absetzen und stapeln kann, wobei hierauf folgend mehrere übereinander gestapelte Lagen an Artikeln auf der Transportvorsehung bzw. auf dem fahrerlosen Transportfahrzeug angeordnet sind. Während des Absetzens und Stapelns von Artikeln bzw. Getränkebehältern auf der als fahrerloses Transportfahrzeug ausgebildeten Transportvorsehung wird die als fahrerloses Transportfahrzeug ausgebildete Transportvorsehung unterbrechungsfrei fortbewegt. Eine Bewegung des ersten Manipulators und eine Bewegung bzw. fortlaufende Bewegung der als fahrerloses Transportfahrzeug ausgebildeten Transportvorsehung sind somit aufeinander abgestimmt. Während des Absetzens von Artikeln bzw. Getränkebehältern auf der als fahrerloses Transportfahrzeug ausgebildeten Transportvorsehung bewegt sich die als fahrerloses Transportfahrzeug ausgebildete Transportvorsehung in definierter Förderrichtung. Die Förderrichtung verläuft parallel und insbesondere (jedoch nicht zwingend) entgegengesetzt zu einer Bewegungsrichtung der über den Zulauf bereits in parallelen Reihen geführten Artikel bzw. Getränkebehälter.

Auch der weitere oder zweite Manipulator ist bei der hier beschriebenen nicht erfindungsgemäßen Ausführungsform ein notwendiger Bestandteil der Stapelbildungsvorrichtung. Über den zweiten Manipulator können weiterhin als Umverpackung ausgebildete Schichten auf der als fahrerloses Transportfahrzeug ausgebildeten Transportvorsehung abgesetzt werden, so dass eine jeweilige als Umverpackung ausgebildete Schicht benachbarte Lagen an Artikeln in vertikaler Richtung voneinander trennt. Der zweite Manipulator kann eine jeweilige als Umverpackung ausgebildete Schicht vom Stapel an Schichten oder Umverpackungen entnehmen und kann beispielsweise als Mehrachsroboter ausgebildet sein.

In einer nachfolgenden Prozessphase hat der erste Manipulator bereits sämtliche Artikel bzw. Getränkebehälter einer auf dem als fahrerloses Transportfahrzeug ausgebildeten Transportvorsehung zu bildenden obersten Lage an Artikeln an die als fahrerloses Transportfahrzeug ausgebildete Transportvorsehung überführt bzw. auf der als fahrerloses Transportfahrzeug ausgebildeten Transportvorsehung abgesetzt. Die oberste Lage an Artikeln ist in der hier betrachteten Phase daher vollständig auf der als fahrerloses Transportfahrzeug ausgebildeten Transportvorsehung angeordnet, wobei die als fahrerloses Transportfahrzeug ausgebildete Transportvorsehung einen Arbeitsbereich des ersten Manipulators und einen Arbeitsbereich des weiteren oder zweiten Manipulators jeweils verlassen hat. Die als fahrerloses Transportfahrzeug ausgebildete Transportvorsehung kann die mehreren übereinander gestapelten Lagen an Artikeln sodann in Richtung einer Verladestation oder in Richtung einer Arbeitsstation bewegen, welche auf die übereinander gestapelten Lagen an Artikeln eine weitere Umverpackung aufbringen kann.

Bei allen hier beschriebenen Ausführungsvarianten kann es vorkommen, dass eine jeweilige Transportvorsehung in einen Arbeitsbereich des ersten Manipulators und des zweiten Manipulators gelangt, wobei sich hierbei auf der Transportvorsehung bereits mehrere Artikel oder bereits mindestens eine vollständige Lage an Artikeln befinden können. Der erste Manipulator kann für eine noch nicht auf der Transportvorsehung befindliche Lage an Artikeln vorgesehene Artikel vom Zulauf entgegennehmen und sodann mindestens eine weitere vollständige Lage an Artikeln auf der Transportvorsehung herstellen bzw. ausbilden.

Bei solchen Ausführungsformen kann es sein, dass sich die bereits auf der Transportvorsehung befindlichen Artikel von den Artikeln, welche über den Zulauf dargeboten werden, unterscheiden. So können die bereits auf der Transportvorsehung befindlichen Artikel beispielsweise durch Getränkebehälter mit einer ersten Getränkesorte ausgebildet sein, wogegen die über den Zulauf dargebotenen Artikel durch Getränkebehälter mit einer zweiten Getränkesorte ausgebildet sind. Vorteilhafterweise können hierdurch einfach und unkompliziert sog. Mischpaletten unter Zuhilfenahme der Stapelbildungsvorrichtung hergestellt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Palettenzusammenstellung, wie sie mit diversen Ausführungsformen des erfindungsgemäßen Verfahrens und diversen Ausführungsformen der erfindungsgemäßen Stapelbildungsvorrichtung hergestellt werden kann.
Figuren 2 bis 13 zeigen schematische Ansichten einer Ausführungsforme einer erfindungsgemäßen Stapelbildungsvorrichtung und verdeutlichen einzelne Schritte, wie sie in diversen Ausführungsformen des erfindungsgemäßen Verfahrens vorgesehen sein können.
Fig. 14 zeigt eine schematische Ansicht einer weiteren Ausführungsform einer erfindungsgemäßen Stapelbildungsvorrichtung und verdeutlicht Schritte, wie sie in diversen Ausführungsformen des erfindungsgemäßen Verfahrens vorgesehen sein können.
Fig. 15 verdeutlicht einzelne zeitlich aufeinanderfolgende Schritte, wie sie bei diversen Ausführungsformen eines erfindungsgemäßen Verfahrens vorgesehen sein können.
Figuren 16 und 17 zeigen schematische Ansichten einer weiteren nicht erfindungsgemäßen Ausführungsform einer Stapelbildungsvorrichtung.

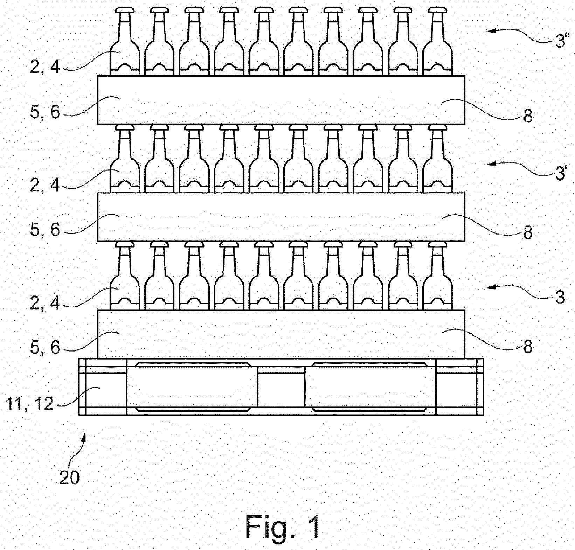

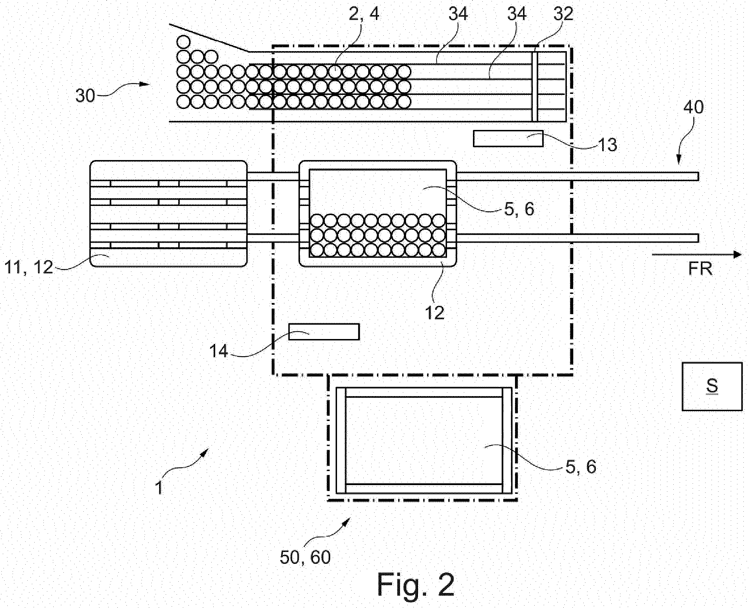

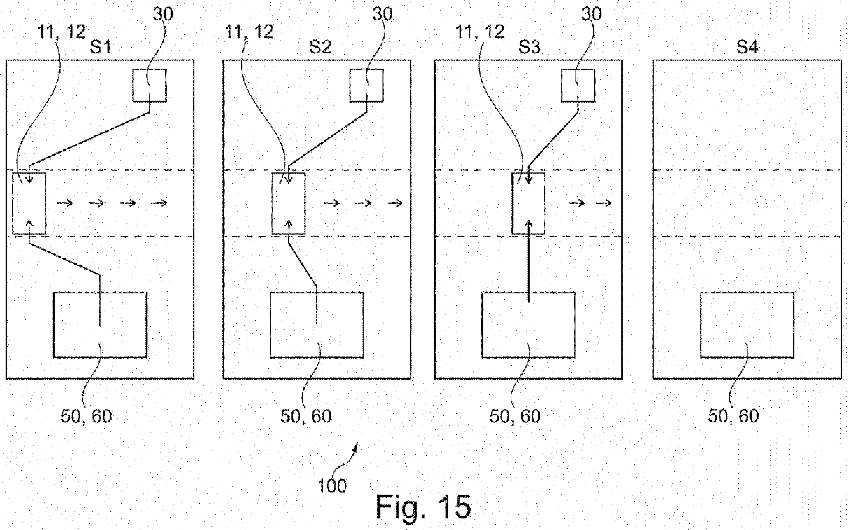

Die schematische Seitenansicht der Fig. 1 illustriert eine Palettenzusammenstellung 20, wie sie mit diversen Ausführungsformen des erfindungsgemäßen Verfahrens 100 (vgl. Fig. 15) und diversen Ausführungsformen der erfindungsgemäßen Stapelbildungsvorrichtung 1 (vgl. Figuren 2 bis 14) gebildet und hergestellt werden kann.

Die in Fig. 1 in einer Seitenansicht gezeigte Palettenzusammenstellung 20 umfasst eine hier so bezeichnete Transportvorsehung 11, welche erfindungsgemäß als Transportpalette 12 ausgebildet ist und auf welcher mehrere mit den Bezugsziffern 3, 3' und 3" gekennzeichnete Lagen an Artikeln gestapelt sind bzw. auf welcher mehrere mit den Bezugsziffern 3, 3' und 3" bezeichnete Lagen an Artikeln mittels einer Stapelbildungsvorrichtung 1 (vgl. Figuren 2 bis 13 sowie 14 und 16 mit 17) übereinander gestapelt angeordnet wurden.

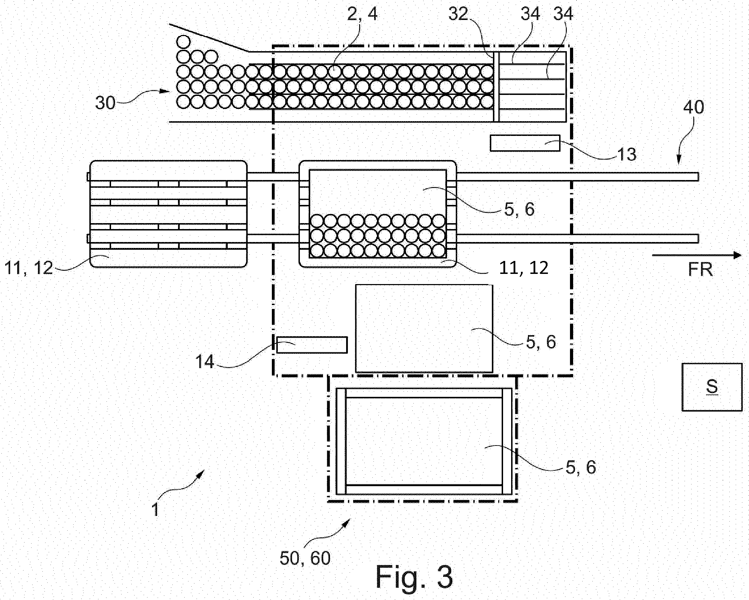

In weiteren nicht erfindungsgemäßen Ausführungsformen kann eine Transportvorsehung 11 beispielsweise über ein fahrerloses Transportfahrzeug ausgebildet bzw. über ein fahrerloses Transportfahrzeug bereitgestellt werden. Auch ist für weitere nicht erfindungsgemäße Ausführungsformen denkbar, dass eine Transportvorsehung 11 über ein Transportband ausgebildet bzw. über ein Transportband bereitgestellt wird. Das Transportband kann ggf. ein umlaufend bewegtes Fördertrum umfassen, auf welchem die in Fig. 3 mit den Bezugsziffern 3, 3' und 3" bezeichneten Lagen an Artikeln mittels einer Stapelbildungsvorrichtung (vgl. Figuren 2 bis 13 sowie 14 und 16 mit 17) übereinander gestapelt angeordnet werden.

Die einzelnen Artikel 2 einer jeweiligen Lage an Artikeln 3, 3' und 3" sind im gezeigten Ausführungsbeispiel jeweils als Getränkebehälter 4 ausgebildet. Eine Mehrzahl an Artikeln 2 einer jeweiligen Lage an Artikeln 3, 3' bzw. 3" stehen auf einer die jeweiligen aufeinander gestapelten Lagen an Artikeln 3, 3' bzw. 3" voneinander trennenden Schicht 5 auf, welche trennende Schicht 5 im vorliegenden Ausführungsbeispiel als Umverpackung 6 ausgebildet ist. Die Umverpackungen 6 besitzen über ihren vollständigen Umfangsverlauf mehrere Laschen 8, die über einen in den nachfolgenden Figuren 2 bis 13 dargestellten zweiten Manipulator 14 aufgerichtet wurden und in der in Fig. 1 gezeigten Position Artikel 2 bzw. Getränkebehälter 4 einer jeweiligen Lage an Artikeln 3, 3' bzw. 3" formschlüssig halten.

In der Praxis werden Umverpackungen 6 gemäß dem Ausführungsbeispiel aus Fig. 1 als Tray bezeichnet. Auch sind Ausführungsformen vorstellbar, bei welchen die aufeinander gestapelte Lagen an Artikeln 3, 3' bzw. 3" trennenden Schichten 5 keine Laschen 8 besitzen, die eingeschlagen wurden bzw. in eine aufrechte Position gemäß Fig. 1 überführt wurden. Solche Umverpackungen 6 bilden weiterhin eine ebene Standfläche für Artikel 2 einer jeweiligen Lage an Artikeln 3, 3' bzw. 3" aus und werden in der Praxis als Pad bezeichnet.

Auch die in Fig. 1 dargestellten und als sog. Tray ausgebildeten Umverpackungen 6 weisen eine ebene Standfläche auf, auf welcher Artikel 2 bzw. Getränkebehälter 4 einer jeweiligen Lage an Artikeln 3, 3' bzw. 3" gemeinsam aufstehen. Durch die zwischen benachbarte Lagen an Artikeln 3, 3' bzw. 3" eingebrachten Schichten 5 bzw. Umverpackungen 6 besitzt die Palettenzusammenstellung 20 eine hohe Stabilität, und dies selbst bei einer Vielzahl an übereinander gestapelten Lagen an Artikeln 3, 3' bzw. 3".

Die Artikel 2 bzw. Getränkebehälter 4 einer jeweiligen Lage an Artikeln 3, 3', bzw. 3" werden in Fig. 1 lediglich mittels einer jeweiligen Umverpackung 6 formschlüssig gehalten. Untereinander sind die Artikel 2 bzw. Getränkebehälter 4 nicht miteinander verbunden. In weiteren Ausführungsformen kann vorgesehen sein, dass mehrere Artikel 2 bzw. Getränkebehälter 4 einer jeweiligen Lage an Artikeln 3, 3' bzw. 3" zu einem Gebinde oder Tragegebinde zusammengefasst sind und hierbei ein jeweiliges Stückgut bilden. Die Laschen 8 der Umverpackungen 6 verdecken im Ausführungsbeispiel einer Palettenzusammenstellung 20 nach Fig. 1 auf Außenmantelflächen der Getränkebehälter 4 aufgebrachte Etiketten nicht vollständig, so dass die auf Außenmantelflächen der Getränkebehälter 4 aufgebrachten Etiketten erkennbar sind.

Die Figuren 2 bis 13 zeigen jeweils in schematischen Ansichten eine Ausführungsform einer erfindungsgemäßen Stapelbildungsvorrichtung 1 und verdeutlichen einzelne Schritte, wie sie in diversen Ausführungsformen des erfindungsgemäßen Verfahrens 100 vorgesehen sein können.

Die Stapelbildungsvorrichtung ist im Ausführungsbeispiel gemäß Figuren 2 bis 13 als Palettiervorrichtung ausgebildet. Bestandteil der Stapelbildungsvorrichtung 1 ist ein Zulauf 30, über welchen Zulauf 30 Artikel 2 bzw. Getränkebehälter 4 zunächst im ungeordneten Massenstrom bewegt bzw. transportiert werden. Der Zulauf 30 umfasst mehrere parallel zueinander orientierte Gassenbleche 34. Über eine als Bestandteil des Zulaufs 30 ausgebildete und die Artikel 2 bzw. Getränkebehälter 4 zunächst im ungeordneten Massenstrom bewegende bzw. transportierende Horizontalfördereinrichtung werden die einzelnen Artikel 2 bzw. Getränkebehälter 4 sodann zwischen die Gassenbleche 34 bewegt bzw. transportiert, so dass die Artikel 2 bzw. Getränkebehälter 4 gemäß Fig. 2 zwischen den mehreren Gassenblechen 34 in mehreren parallel zueinander orientierten Reihen bewegt bzw. transportiert werden.

Ein Erfassungsbereich eines in Fig. 2 lediglich schematisch dargestellten und als Bestandteil der Stapelbildungsvorrichtung 1 ausgebildeten ersten Manipulators 13 erstreckt sich über einen Bereich des Zulaufs 30, in welchem Bereich der Zulauf 30 die Gassenbleche 34 ausbildet. Somit kann der erste Manipulator 13 aus dem Bereich des Zulaufs 30, welcher Bereich die Gassenbleche 34 ausbildet, zumindest näherungsweise zeitgleich mehrere bereits in parallelen Reihen bewegte Artikel 2 bzw. zumindest näherungsweise zeitgleich mehrere bereits in parallelen Reihen bewegte Getränkebehälter 4 vom Zulauf 30 entgegennehmen. Der erste Manipulator 13 kann beispielsweise als Mehrachsroboter und/oder als Portalroboter ausgebildet sein.

Zu erkennen ist eine als Bestandteil der Stapelbildungsvorrichtung 1 ausgebildete Transporteinrichtung 40, welche als Bestandteil der Stapelbildungsvorrichtung 1 ausgebildete Transporteinrichtung 40 mehrere als Transportpaletten 12 ausgebildete Transportvorsehungen 11 beabstandet zueinander in Förderrichtung FR bewegt. Die Transporteinrichtung 40 ist derart positioniert, dass der erste Manipulator 13 bereits vom Zulauf 30 entgegengenommene Artikel 2 bzw. bereits vom Zulauf 30 entgegengenommene Getränkebehälter 4 zumindest näherungsweise zeitgleich auf einer hierfür vorgesehenen und mittels der Transporteinrichtung 40 in Förderrichtung FR bewegten Transportvorsehung 11 bzw. Transportpalette 12 absetzen kann. Über die Transporteinrichtung 40 wird somit eine zur Aufnahme von Artikeln 2 bzw. zur Aufnahme von Getränkebehältern 4 vorgesehene Transportpalette 12 in den Arbeitsbereich des ersten Manipulators 13 bewegt und nach vollständigem und nachfolgend noch detailliert beschriebenem Fertigstellen einer Palettenzusammenstellung 20 (vgl. Fig. 1) aus dem Arbeitsbereich des ersten Manipulators 13 geführt.

In der in Fig. 2 gezeigten Förder- und Handhabungssituation wurden bereits in einem zeitlich vorausgehenden Schritt mehrere vom Zulauf 30 entgegengenommene Artikel 2 bzw. mehrere vom Zulauf 30 entgegengenommene Getränkebehälter 4 auf der Transportpalette 12 abgesetzt und bilden in Fig. 2 eine noch nicht fertig gestellte Lage an Artikeln 3, 3' bzw. 3" (vgl. Fig. 1) auf der Transportpalette 12 aus. Die schematische Draufsicht der Fig. 2 verdeutlicht zudem, dass die bereits auf der Transportpalette 12 abgesetzten Artikel 2 bzw. die bereits auf der Transportpalette 12 abgesetzten Getränkebehälter 4 über eine bereits auf der Transportpalette 12 angeordnete Schicht 5 bzw. Umverpackung 6 mittelbar auf der Transportpalette 12 aufstehen. Um die Schicht 5 bzw. Umverpackung 6 an die Transportpalette 12 zu überführen, umfasst die Stapelbildungsvorrichtung 1 einen lediglich schematisch angedeuteten zweiten Manipulator 14. Der erste Manipulator 13 und der zweite Manipulator 14 befinden sich auf gegenüberliegenden Seiten der Transporteinrichtung 40.

Weiter ist ein Stapel an Schichten 50 bzw. ein Stapel an Umverpackungen 60 vorgesehen. Der zweite Manipulator 14 kann eine jeweilige zuoberst auf dem Stapel 50 angeordnete Schicht 5 bzw. eine jeweilige zuoberst auf dem Stapel 60 angeordnete Umverpackung 60 vom Stapel 50 bzw. 60 entgegennehmen, hierauf seitliche Laschen 8 (vgl. Fig. 1) einer jeweiligen Schicht 5 bzw. Umverpackung 6 in eine aufrechte Orientierung überführen und die jeweilige Schicht 5 bzw. die jeweilige Umverpackung 6 mit ihren in die jeweilige aufrechte Orientierung überführten Laschen 8 sodann auf einer jeweiligen hierfür vorgesehenen und mittels der Transporteinrichtung 50 bewegten Transportpalette 12 absetzen. Auch der zweite Manipulator 14 kann beispielsweise als Mehrachsroboter oder als Portalroboter ausgebildet sein.

Um die Transportpaletten 12 in Förderrichtung FR zu bewegen, kann die Transporteinrichtung 40 beispielsweise mindestens einen umlaufend geführten Riemen und/oder mindestens einen umlaufend bewegten Kettentrieb umfassen. Auch ist denkbar, dass die Transporteinrichtung 40 zur Bewegung von Transportpaletten 12 in Förderrichtung FR mindestens ein fahrerloses Transportfahrzeug und/oder eine induktive Leitlinie bzw. eine induktive Spurführung besitzt. In weiteren Ausführungsformen kann die Transporteinrichtung 40 zur Bewegung der Transportpaletten 12 in Förderrichtung FR mindestens einen elektromagnetischen Direktantrieb besitzen.

Die als Bestandteil des Zulaufs 30 und zur Bewegung von Artikeln 2 bzw. Getränkebehältern 4 in mehreren parallelen Reihen vorgesehene Horizontalfördereinrichtung, die Transporteinrichtung 40 sowie der erste Manipulator 13 und der zweite Manipulator 14 stehen in Verbindung mit einer Steuer- und/oder Regeleinrichtung S.

Über die Steuer- und/oder Regeleinrichtung S wird die als Bestandteil des Zulaufs 30 ausgebildete und zur Bewegung von Artikeln 2 bzw. Getränkebehältern 4 vorgesehene Horizontalfördereinrichtung derart angesteuert, dass die als Bestanteil des Zulaufs 30 ausgebildete und zur Bewegung von Artikeln 2 bzw. Getränkebehältern 4 ausgebildete Horizontalfördereinrichtung die bereits zwischen den Gassenblechen 34 angeordneten Artikel 2 bzw. Getränkebehälter 4 über den Zeitverlauf mit zumindest näherungsweise gleichbleibender Fördergeschwindigkeit bewegt. Die bereits zwischen den Gassenblechen 34 befindlichen und in parallelen Reihen bewegten Artikel 2 bzw. Getränkebehälter 4 stehen somit zu keiner Zeit still und werden mittels der als Bestandteil des Zulaufs 30 ausgebildeten Horizontalfördereinrichtung unterbrechungsfrei und vorzugsweise mit gleichbleibender Fördergeschwindigkeit bewegt. Ein Transport der bereits zwischen den Gassenblechen 34 befindlichen Artikel 2 bzw. der bereits zwischen den Gassenblechen 34 befindlichen Getränkebehälter 4 erfolgt hierbei in einer Richtung, welche parallel zur Förderrichtung FR der Transporteinrichtung 40 orientiert ist.

Weiter wird über die Steuer- und/oder Regeleinrichtung S die Transporteinrichtung 40 derart angesteuert, dass die Transporteinrichtung 40 die Transportpaletten 12 spätestens mit dem jeweiligen Eintritt in den Arbeitsbereich der ersten Manipulators 12 und/oder in den Arbeitsbereich des zweiten Manipulators 14 und wenigstens bis zum vollständigen Fertigstellen einer jeweiligen Palettenzusammenstellung 20 (vgl. Fig. 1) bzw. wenigstens bis zum Fertigstellen einer auf der jeweiligen Transportpalette 12 zuoberst anzuordnenden Lage an Artikeln 3" unterbrechungsfrei fortbewegt. Da die Transportpaletten 12 hierdurch während eines Stapelbildungsprozesses zu keiner Zeit stillstehen, kann das Herstellen einer Palettenzusammenstellung 20 (vgl. Fig. 1) mit hohem Durchsatz erfolgen. Auch ist es nicht notwendig, eine stillstehende Transportpalette 12 mit aufstehenden Artikeln 2 bzw. Getränkebehältern 4 zu beschleunigen, wodurch bei bereits bekannten Palettiervorrichtungen einzelne auf einer Transportpalette 12 aufstehende Artikel 2 bzw. Getränkebehälter 4 ungewollt kippen können. Mittels der Stapelbildungsvorrichtung 1 können daher Palettenzusammenstellungen 20 mit hoher Zuverlässigkeit hergestellt werden.

Eine Zusammenschau der Figuren 2 und 3 lässt erkennen, dass Artikel 2 bzw. Getränkebehälter 4 über den Zulauf 30 weiter bewegt wurden, wobei ein jeweiliger vorderer Artikel 2 bzw. ein jeweiliger vorderer Getränkebehälter 4 einer jeweiligen zwischen den Gassenblechen 34 bewegten Reihe an Artikeln 2 bzw. einer jeweiligen zwischen den Gassenblechen 34 bewegten Reihe an Getränkebehältern 4 hierbei mit einem Anlagebalken 32 in Oberflächenkontakt gerät.

Auch lässt eine Zusammenschau der Figuren 2 und 3 erkennen, dass der Anlagebalken 32 bewegbar ausgebildet ist, bzw. dass der Anlagebalken 32 entlang des Zulaufs 30 verfahren werden kann. Die Bewegung erfolgt hierbei auf Veranlassung der Steuer- und/oder Regeleinrichtung S und ist auf eine jeweilige Entgegennahme von Artikeln 2 bzw. von Getränkebehältern 4, welche jeweilige Entgegennahme über den ersten Manipulator 12 erfolgt, abgestimmt. So sind Artikel 2 bzw. Getränkebehälter 4 entsprechend der Position des Anlagebalkens 32 gemäß Fig. 3 derart entlang einer durch den Zulauf 30 für Artikel 2 bzw. Getränkebehälter 4 vorgesehenen Bewegungsrichtung ausgerichtet, dass sich die Artikel 2 bzw. Getränkebehälter 4 im Hinblick auf die durch den Zulauf 30 für Artikel 2 bzw. Getränkebehälter 4 vorgesehenen Bewegungsrichtung an einer jeweiligen vorbestimmten Position befinden, in welcher jeweiligen vorbestimmten Position der erste Manipulator 13 die jeweiligen Artikel 2 bzw. die jeweiligen Getränkebehälter 4 vom Zulauf 30 abholt.

Die schematische Draufsicht der Fig. 3 zeigt zudem, dass der zweite Manipulator 14 eine Schicht 5 bzw. eine Umverpackung 6 vom Stapel 50 bzw. 60 abgezogen hat und die vom Stapel 50 bzw. 60 abgezogene Schicht 5 bzw. Umverpackung 6 nun in Richtung einer zugeordneten Transportpalette 12 bzw. in Richtung der Transporteinrichtung 40 bewegt.

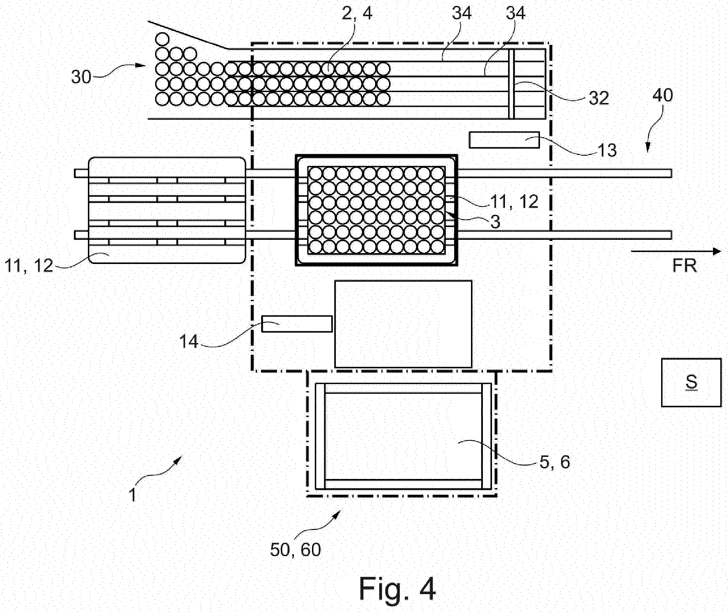

Die vom Zulauf 30 über den ersten Manipulator 13 bereits entgegengenommenen Artikel 2 bzw. Getränkebehälter 4 werden in Fig. 3 noch vom ersten Manipulator 13 getragen und sind in Fig. 4 vom ersten Manipulator 13 bereits auf der hierfür vorgesehenen Transportpalette 12 bzw. auf der bereits hierfür vorgesehenen Transportpalette 12 angeordneten Schicht 5 bzw. Umverpackung 6 abgesetzt. In Fig. 4 ist sodann die unterste Lage an Artikeln 3 (vgl. Fig. 1) vollständig auf der hierfür vorgesehenen Transportpalette 12 angeordnet. Die über den zweiten Manipulator 14 bereits vom Stapel 50 bzw. 60 abgezogene Schicht 5 bzw. Umverpackung 6 befindet sich in Fig. 4 noch in einer Warteposition und kann nun auf die bereits auf der Transportpalette 12 angeordnete untere Lage an Artikeln 3 aufgesetzt werden.

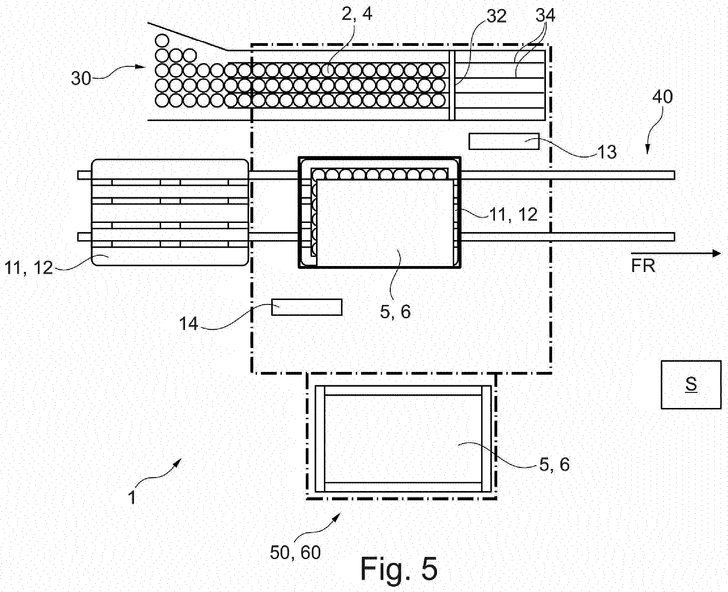

Entsprechend Fig. 5 wird die bereits vom Stapel 50 bzw. 60 abgezogene Schicht 5 bzw. Umverpackung 6 weiter in Richtung der hierfür vorgesehenen Transportpalette 12 bewegt, bis sich die bereits vom Stapel 50 bzw. 60 abgezogene Schicht 5 bzw. Umverpackung 6 oberhalb der bereits auf der Transportpalette 12 abgesetzten unteren Lage an Artikeln 3 befindet.

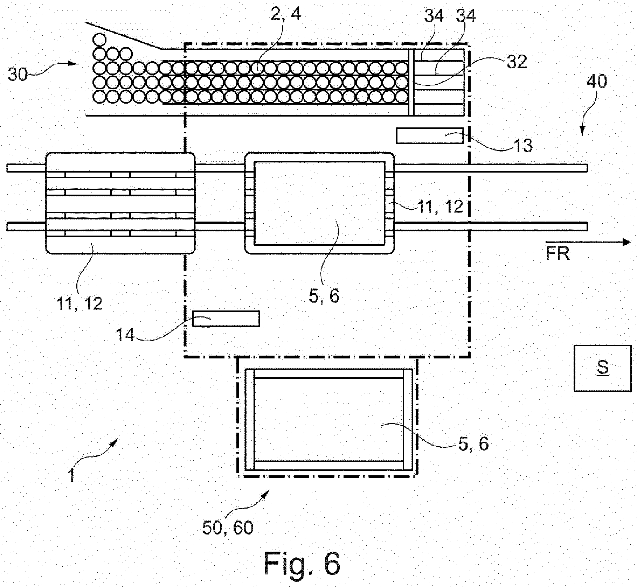

In Fig. 6 hat die bereits vom Stapel 50 bzw. 60 abgezogene Schicht 5 bzw. die bereits vom Stapel 50 bzw. 60 abgezogene Umverpackung 6 diese Position erreicht und verdeckt die bereits auf der Transportpalette 12 abgesetzte untere Lage an Artikeln 3 vollständig. In der Position nach Fig. 6 kann die bereits vom Stapel 50 bzw. 60 abgezogene Schicht 5 bzw. Umverpackung 6 nun auf die bereits auf der Transportpalette 12 angeordnete untere Lage an Artikeln 3 aufgesetzt werden, wobei die Transportpalette 12 sowie die bereits auf der Transportpalette 12 abgesetzte untere Lage an Artikeln 3 zeitlich während des Aufsetzens der Schicht 5 bzw. der Umverpackung 6 unterbrechungsfrei fortbewegt werden bzw. zu keinem Zeitpunkt stillstehen. Die unterbrechungsfreie Bewegung der Transportpalette 12 erfolgt, wie vorhergehend bereits beschrieben, über die Transporteinrichtung 40 und hierbei auf Veranlassung der Steuer- und/oder Regeleinrichtung S.

Eine Zusammenschau der Figuren 5 und 6 zeigt zudem, dass zwischen den Gassenblechen 34 befindliche Artikel 2 bzw. Getränkebehälter 4 zusammen mit dem Anlagebalken 32 bewegt werden, wobei der Anlagebalken 32 während der Bewegung in Oberflächenkontakt mit zuvorderst befindlichen Artikeln 2 bzw. mit zuvorderst befindlichen Getränkebehältern 4 einer jeweiligen zwischen den Gassenblechen 34 bewegten Reihe an Artikeln 2 bzw. Reihe an Getränkebehältern 4 bleibt. In Fig. 6 befinden sich jeweilige zur Überführung an die Transportpalette 12 vorgesehene Artikel 2 bzw. jeweilige zur Überführung an die Transportpalette 12 vorgesehene Getränkebehälter 4 in einer Position, in welcher der erste Manipulator 13 diese jeweiligen zur Überführung an die Transportpalette 12 vorgesehene Artikel 2 bzw. diese jeweiligen zur Überführung an die Transportpalette 12 vorgesehenen Getränkebehälter 4 vom Zulauf 3 entgegennehmen und sodann in Richtung der Transporteinrichtung 40 bzw. in Richtung der jeweiligen mittels der Transporteinrichtung 40 bewegten Transportpalette 12 bewegen kann.

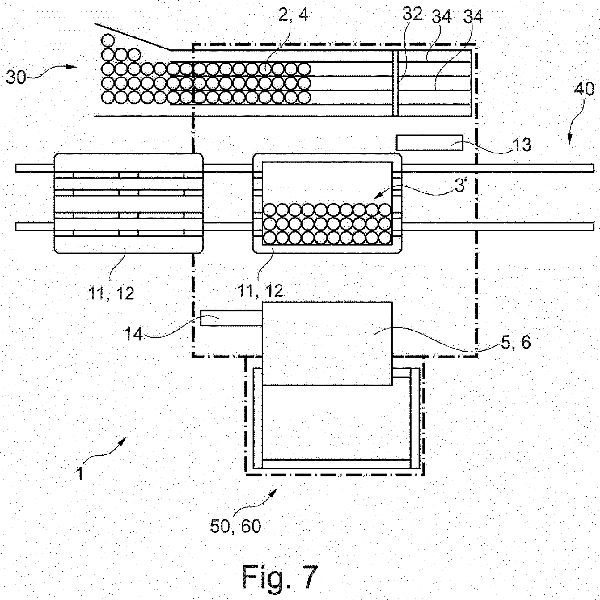

Nach erfolgter Entgegennahme der jeweiligen Artikel 2 bzw. Getränkebehälter 4 vom Zulauf 30 werden diese sodann auf der bereits auf der Transportpalette 12 angeordneten Schicht 5 bzw. auf der bereits auf der Transportpalette 12 angeordneten Umverpackung 6 gemäß Fig. 7 abgesetzt. Hierdurch wird eine noch nicht vollständige bzw. eine bis dahin noch nicht fertig gestellte mittlere Lage an Artikeln 3' (vgl. Fig. 1) auf der jeweiligen Transportpalette 12 ausgebildet. Die schematische Draufsicht der Fig. 7 zeigt weiterhin, dass erneut eine zuoberst auf dem Stapel 50 bzw. dem Stapel 60 befindliche Schicht 5 bzw. Umverpackung 6 vom Stapel 50 bzw. vom Stapel 60 abgezogen wird. Während des Überführens bzw. während des Absetzens der Artikel 2 bzw. Getränkebehälter 4 auf der Schicht 5 bzw. Umverpackung 6 gemäß Fig. 7 wird die Transportpalette 12 über der Transporteinrichtung 40 unterbrechungsfrei fortbewegt, so dass die Transportpalette 12 zu keinem Zeitpunkt stillsteht.

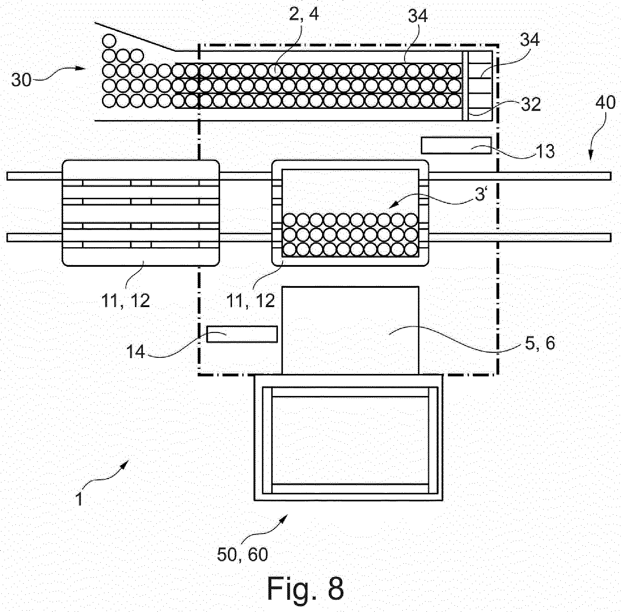

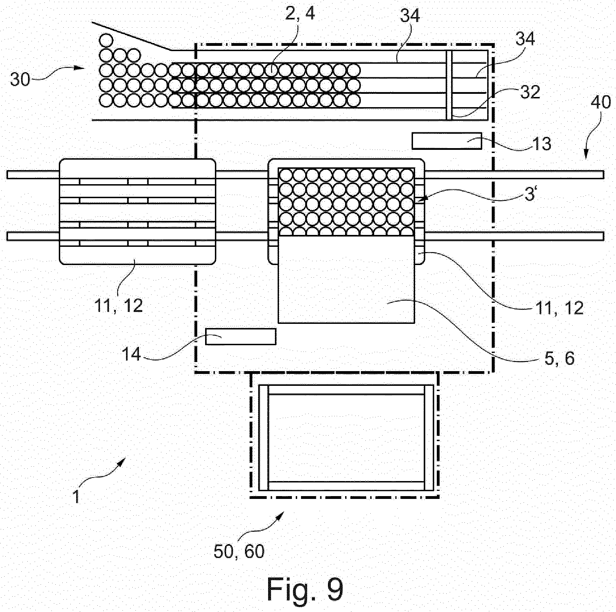

Durch eine Zusammenschau der Figuren 8 und 9 wird deutlich, dass über den ersten Manipulator 13 erneut für die mittlere Lage an Artikeln 3' vorgesehene Artikel 2 bzw. für die mittlere Lage an Artikeln 3' vorgesehene Getränkebehälter 4 vom Zulauf 30 entgegengenommen wurden und auf der bereits mittels des zweiten Manipulators 14 auf der Transportpalette 12 abgesetzten Schicht 5 bzw. Umverpackungen 6 abgesetzt wurden, so dass sich in Fig. 9 nun eine vollständige mittlere Lage an Artikeln 3' auf der Transportpalette 12 befindet. Die vom Stapel 50 bzw. 60 in Fig. 9 nun vollständig abgezogene Schicht 5 bzw. Umverpackung 6 wurde aus der Position nach Fig. 8 weiter in Richtung der Transportpalette 12 bewegt, welche in Fig. 9 die vollständige mittlere Lage an Artikeln 3' aufgenommen hat. Während des Absetzens der für die mittlere Lage an Artikeln 3' vorgesehenen Artikel 2 bzw. Getränkebehälter 4 auf der Transportpalette 12 gemäß Fig. 9 wurde die Transportpalette 12 über die Transporteinrichtung 40 weiterhin fortbewegt, so dass die Transportpalette 12 zu keinem Zeitpunkt stillsteht.

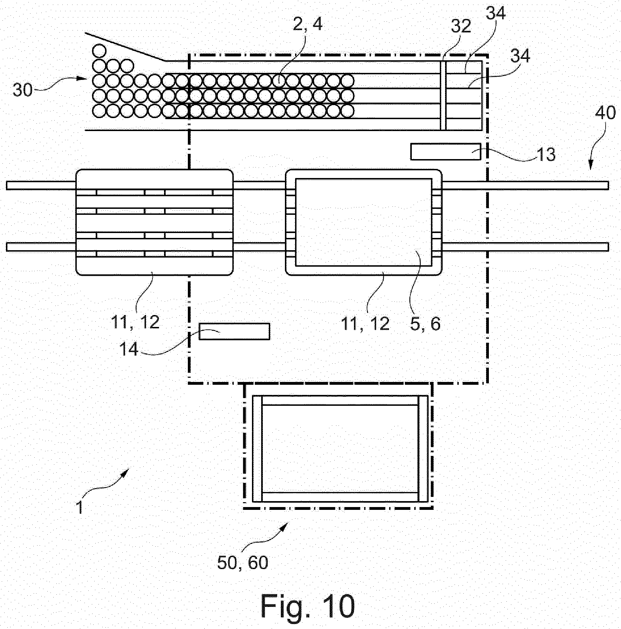

In der Darstellung der Fig. 10 wurde die Schicht 5 bzw. Umverpackung 6 auf der in Fig. 9 noch zu erkennenden mittleren Lage an Artikeln 3' abgesetzt. Die Transportpalette 12 sowie die auf der Transportpalette 12 in Fig. 10 bereits aufstehende untere Lage an Artikeln 3 und die in Fig. 10 auf der Transportpalette 12 bereits aufstehende mittlere Lage an Artikeln 3' wurden hierbei kontinuierlich fortbewegt und standen zu keinem Zeitpunkt still.

Durch die kontinuierliche Bewegung von Artikeln 2 bzw. Getränkebehältern 4 über den Zulauf 30 wurden Artikel 2 bzw. Getränkebehälter 4 zwischen den Gassenblechen 34 fortbewegt und befinden sich in Fig. 10 in einer Position, aus welcher der erste Manipulator 13 die jeweiligen Artikel 2 bzw. Getränkebehälter 4 zum Herstellen einer oberen Lage an Artikeln 3" (vgl. Fig. 1) vom Zulauf 30 abholen bzw. vom Zulauf 30 entgegennehmen kann.

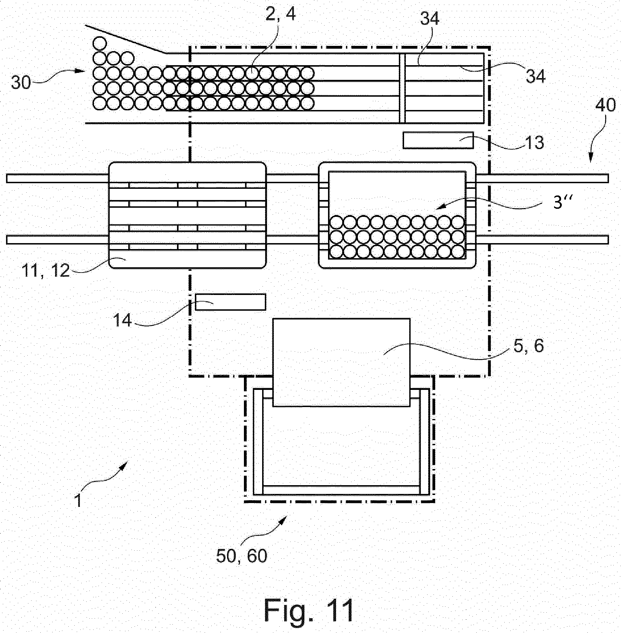

Wie in Fig. 11 zu erkennen, wurden die für eine obere Lage an Artikeln 3" vorgesehenen Artikel 2 bzw. Getränkebehälter 4 bereits auf der hierfür vorgesehenen Transportpalette 12 abgesetzt und bilden eine noch nicht vollständige obere Lage an Artikeln 3" auf der Transportpalette 12 aus. Erneut wird in Fig. 11 eine zuoberst auf dem Stapel 50 bzw. 60 angeordnete Schicht 5 bzw. Umverpackung 6 vom Stapel 50 bzw. 60 abgezogen und über den zweiten Manipulator 14 in Richtung der Transportpalette 12 bzw. in Richtung der Transporteinrichtung 40 bewegt. Während des Absetzens der für die obere Lage an Artikeln 3" vorgesehenen Artikel 2 bzw. Getränkebehälter 4 auf der Transportpalette 12 wird die Transportpalette 12 kontinuierlich fortbewegt und steht zu keiner Zeit still.

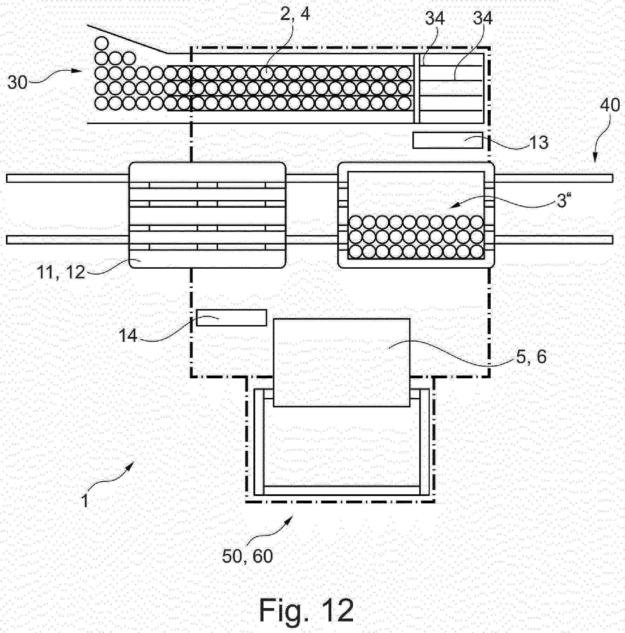

Eine Zusammenschau der Figuren 11 und 12 verdeutlicht nochmals die kontinuierliche Bewegung der zwischen den Gassenblechen 34 des Zulaufs 30 angeordneten Artikel 2 bzw. Getränkebehälter 4. Durch die kontinuierliche Bewegung der zwischen den Gassenblechen 34 des Zulaufs 30 angeordneten Artikel 2 bzw. Getränkebehälter 4 stehen Artikel 2 bzw. Getränkebehälter 4 zur Entgegennahme für den ersten Manipulator 13 bereits bereit, wenn der erste Manipulator 13 nach Absetzen von Artikeln 2 bzw. Getränkebehältern 4 auf der Transportpalette 12 den Zulauf 30 erneut erreicht.

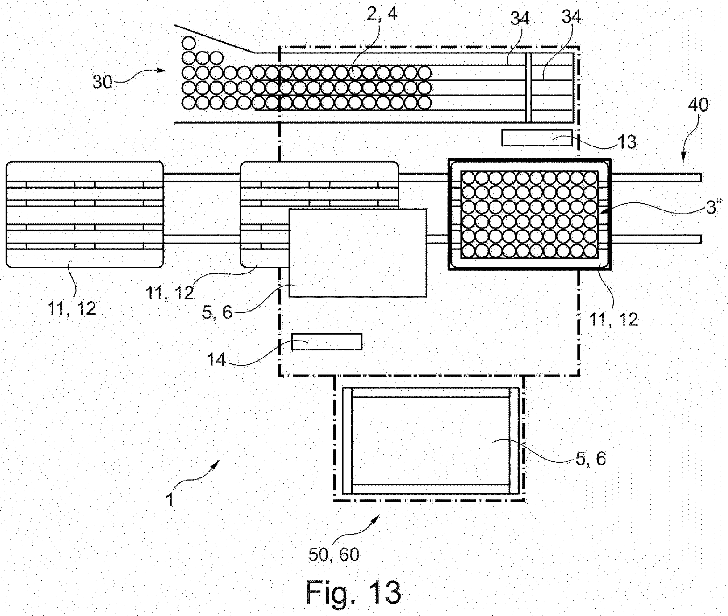

Nach erneuter Entgegennahme von Artikeln 2 bzw. Getränkebehältern 4 vom Zulauf 30 werden diese Artikel 2 bzw. Getränkebehälter 4 auf der Transportpalette 12 abgesetzt und bilden sodann die vollständige obere Lage an Artikeln 3" gemäß Fig. 13. Die Transportpalette 12 bildet zusammen mit den hierauf abgesetzten Schichten 5 bzw. Umverpackungen 6 sowie den hierauf abgesetzten Lagen an Artikeln 3, 3' und 3" eine fertige Palettenzusammenstellung und kann mittels der Transporteinrichtung 40 aus dem Arbeitsbereich des ersten Manipulators 13 bewegt werden. Beginnend mit dem Eintritt in den Arbeitsbereich des ersten Manipulators 13 und/oder des zweiten Manipulators 14 wird die Transportpalette 12 bis zeitlich nach dem Fertigstellen der vollständigen Palettenzusammenstellung unterbrechungsfrei bewegt und steht zu keinem Zeitpunkt still.

Die Fig. 13 zeigt zudem, dass eine nachfolgende und bis dahin noch leere Transportpalette 12 in den Arbeitsbereich der Manipulatoren 13 und 14 eingebracht und hierbei kontinuierlich bewegt wird. In Fig. 13 wurde erneut eine Schicht 5 bzw. Umverpackung 6 vom Stapel 50 bzw. 60 abgezogen und wird in Fig. 13 in Richtung der bis dahin noch leeren Transportpalette 12 bewegt und sodann auf der bis dahin noch leeren Transportpalette 12 unterhalb einer auf der bis dahin noch leeren Transportpalette zu bildenden unteren Lage an Artikeln 3 bzw. Getränkebehältern 4 abgesetzt. Die weiteren Schritte erfolgen sodann für die neue bzw. in Fig. 13 noch leere Transportpalette 12 entsprechend der Beschreibung zu den vorhergehenden Figuren 2 bis 12. Bis zum vollständigen Fertigstellen der Palettenzusammenstellung 20 (vgl. Fig. 1) mit der neuen und in Fig. 13 noch leeren Transportpalette 12 wird auch die neue und in Fig. 13 noch leere Transportpalette 12 unterbrechungsfrei bzw. kontinuierlich bewegt und steht zu keiner Zeit still.

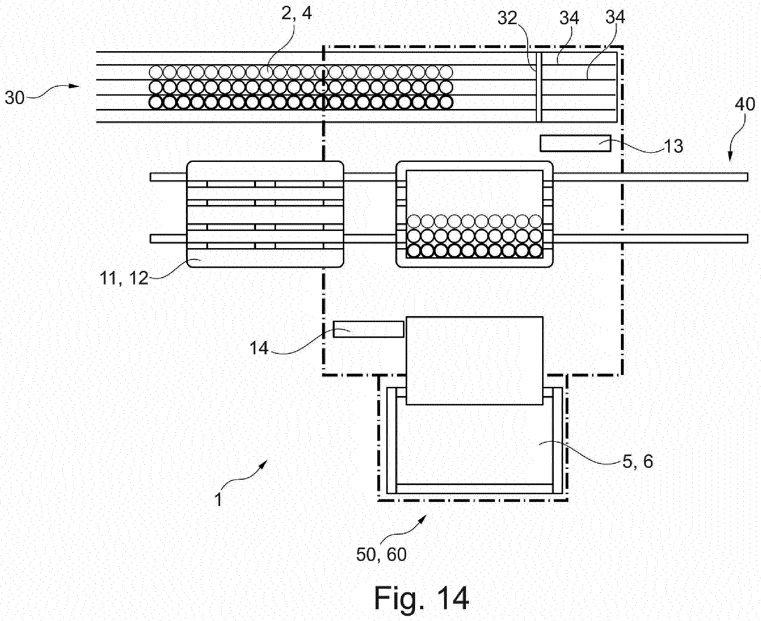

Die Fig. 14 zeigt eine schematische Ansicht einer weiteren Ausführungsform einer erfindungsgemäßen Stapelbildungsvorrichtung 1 und verdeutlicht Schritte, wie sie in diversen Ausführungsformen des erfindungsgemäßen Verfahrens 100 vorgesehen sein können.

Gegenüber der in den Figuren 2 bis 13 beschriebenen Ausführungsform einer Stapelbildungsvorrichtung 1 unterscheidet sich das Ausführungsbeispiel aus Fig. 14 in der Ausbildung des Zulaufs 30 sowie in der hiermit einhergehenden Ausbildung der mit der Transportpalette 12 zu bildenden Palettenzusammenstellung. Im Ausführungsbeispiel aus den Figuren 2 bis 13 werden identische Artikel 2 bzw. Getränkebehälter 4 zunächst im ungeordneten Massenstrom bewegt und werden sodann ohne vorhergehende Einteilung als parallele Reihen zwischen den Gassenblechen 34 bewegt.

Hingegen wurden die Artikel 2 bzw. Getränkebehälter 4 im Ausführungsbeispiel nach Fig. 14 vor ihrer Bewegung in parallelen Reihen bzw. vor ihrem Eintritt in mittels der Gassenbleche 34 gebildeten Gassen geordnet, so dass sich in einer jeweiligen über ein paar unmittelbar benachbarter Gassenbleche 34 gebildeten Gasse lediglich Artikel 2 bzw. Getränkebehälter 4 befinden, die hinsichtlich ihres Inhalts, ihrer Art und/oder hinsichtlich ihrer geometrischen Form identisch ausgebildet sind.

In der Praxis kann hierbei vorgesehen sein, dass zwischen einem ersten Paar an unmittelbar benachbarten Gassenblechen 34 eine erste Reihe an Artikeln 2 bewegt wird, welche Artikel 2 der ersten Reihe ausschließlich durch eine erste Getränkesorte beinhaltende Getränkebehälter 4 ausgebildet sind. Zudem kann es sein, dass zwischen einem zweiten Paar an unmittelbar benachbarten Gassenblechen 34 eine zweite Reihe an Artikeln 2 bewegt wird, welche Artikel 2 der zweiten Reihe ausschließlich durch eine zweite Getränkesorte beinhaltende Getränkebehälter 4 ausgebildet sind, welche zweite Getränkesorte sich von der ersten Getränkesorte unterscheidet.

Weiter kann es sein, dass zwischen einem dritten Paar an unmittelbar benachbarten Gassenblechen 34 eine dritte Reihe an Artikeln 2 bewegt wird, welche Artikel 2 der dritten Reihe ausschließlich durch eine dritte Getränkesorte enthaltende Getränkebehälter 4 ausgebildet sind, welch dritte Getränkesorte sich von der ersten Getränkesorte und der zweiten Getränkesorte unterscheidet. Mittels der nachfolgenden Entgegennahme von Artikeln 2 bzw. Getränkebehältern 4 mit unterschiedlichen Getränkesorten lassen sich durch die Schritte gemäß vorhergehender Beschreibung zu den Figuren 2 bis 13 Palettenzusammenstellungen herstellen, die Artikel 2 bzw. Getränkebehälter 4 mit unterschiedlichen Getränkesorten aufweisen. Solche Palettenzusammenstellungen werden in der Praxis als sogenannte Mischpaletten bezeichnet.

Die schematische Darstellung der Fig. 15 verdeutlicht einzelne zeitlich aufeinanderfolgende Schritte S1 bis S4, wie sie bei diversen Ausführungsformen eines erfindungsgemäßen Verfahrens 100 vorgesehen sein können. So wird in einem ersten Schritt S1 eine Transportpalette 12 in einen Arbeitsbereich eines in den vorhergehenden Figuren 2 bis 14 jeweils dargestellten ersten Manipulators 13 und/oder zweiten Manipulators 14 bewegt. Im ersten Verfahrensschritt S1 wird zudem eine Umverpackung 6 auf der Transportpalette 12 abgesetzt und eine untere Lage an Artikeln 3 auf der sodann auf der Transportpalette 12 befindlichen Umverpackung 6 angeordnet. Während des Absetzens der Umverpackung 6 sowie während des Absetzens der unteren Lage an Artikeln 3 wird die Transportpalette 12 kontinuierlich fortbewegt und steht zu keiner Zeit still.

In einem dem ersten Verfahrensschritt S1 zeitlich folgenden zweiten Verfahrensschritt S2 wird eine weitere Umverpackung 6 von dem Stapel 50 bzw. 60 abgezogen und auf der bereits auf der Transportpalette 12 befindlichen unteren Lage an Artikeln 3 angeordnet. Auf der nun auf der unteren Lage an Artikeln 3 angeordneten Umverpackung 6 wird eine weitere bzw. mittlere Lage an Artikeln 3' (vgl. Fig. 1) abgesetzt. Die einzelnen Artikel 2 bzw. Getränkebehälter 4 der mittleren Lage an Artikeln 3' werden erneut vom Zulauf 30 entgegengenommen. Während des Abziehens der weiteren Umverpackung 6 vom Stapel 50 bzw. 60, während des Anordnens der weiteren Umverpackung 6 auf der bereits auf der Transportpalette 12 befindlichen unteren Lage an Artikeln 3 sowie während des Absetzens der weiteren bzw. mittleren Lage an Artikeln 3' auf der Umverpackung 6 steht die Transportplatte 12 zu keiner Zeit still und wird unterbrechungsfrei bzw. kontinuierlich fortbewegt.

In einem auf den zweiten Verfahrensschritt zeitlich folgenden dritten Verfahrensschritt S3 wird eine weitere Umverpackung 6 von dem Stapel 50 bzw. 60 abgezogen und auf der bereits auf der Transportpalette 12 befindlichen mittleren Lage an Artikeln 3' angeordnet. Auf der nun auf der mittleren Lage an Artikeln 3' angeordneten Umverpackung 6 wird eine weitere obere Lage an Artikeln 3" (vgl. Fig. 1) abgesetzt. Die einzelnen Artikel 2 bzw. Getränkebehälter 4 der oberen Lage an Artikeln 3" werden erneut vom Zulauf 30 entgegengenommen.

Während des Abziehens der weiteren Umverpackung 6 vom Stapel 50 bzw. 60, während des Anordnens der weiteren Umverpackung auf der bereits auf der Transportpalette 12 befindlichen mittleren Lage an Artikeln 3' sowie während des Absetzens der oberen Lage an Artikeln 3" auf der Umverpackung 6 steht die Transportpalette 12 zu keiner Zeit still und wird unterbrechungsfrei bzw. kontinuierlich fortbewegt.

Zeitlich nach dem Absetzen der oberen Lage an Artikeln 3" auf der Umverpackung 6 ist die Palettenzusammenstellung 20 (vgl. Fig. 1) vollständig hergestellt. Im nachfolgenden vierten Verfahrensschritt S4 wird die vollständige hergestellte Plattenzusammenstellung 20 sodann in Richtung einer Verladestation bewegt.

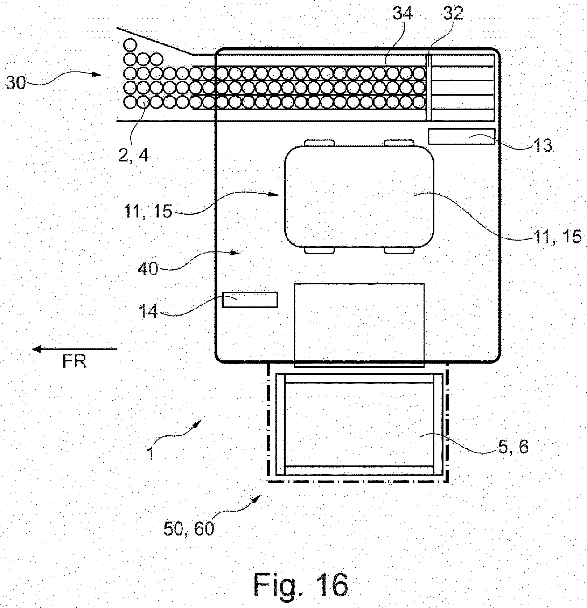

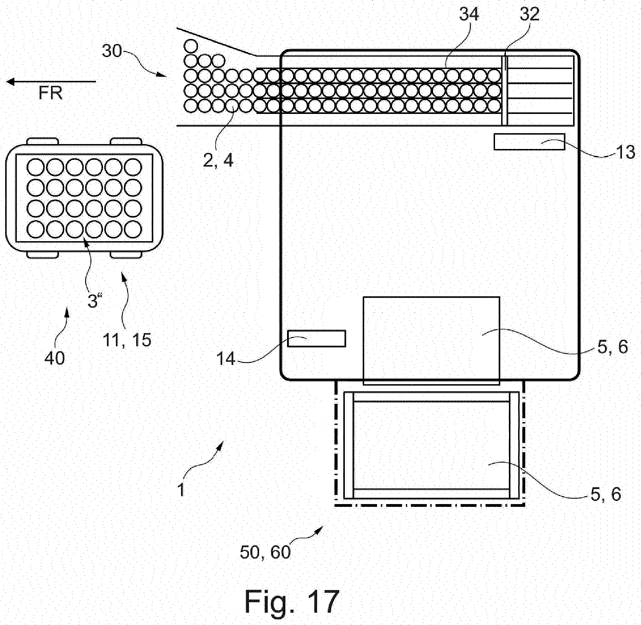

Die Figuren 16 und 17 zeigen jeweils schematische Ansichten bzw. Draufsichten einer weiteren nicht erfindungsgemäßen Ausführungsform einer Stapelbildungsvorrichtung 1. Auch die Stapelbildungsvorrichtung 1 aus dem Ausführungsbeispiel nach Figuren 16 und 17 umfasst einen Zulauf 30, über welchen Zulauf 30 Artikel 2 bzw. Getränkebehälter 4 zunächst im ungeordneten Massenstrom bewegt bzw. transportiert werden. Weiterhin sind mehrere parallel zueinander orientierte Gassenbleche 34 zu erkennen, zwischen welchen die Artikel 2 bzw. Getränkebehälter 4 in mehreren parallel zueinander orientierten Reihen bewegt werden. Ein Anlagebalken 32 ist vorgesehen, dessen Funktion gemäß dem Ausführungsbeispiel aus den vorhergehenden Figuren 2 bis 13 bzw. dem Ausführungsbeispiel aus Fig. 14 ausgebildet ist.

Zudem ist bei der Stapelbildungsvorrichtung 1 aus dem Ausführungsbeispiel nach Fig. 16 der bereits beschriebene erste Manipulator 13 vorgesehen, dessen Erfassungsbereich sich über einen Bereich des Zulaufs 30 erstreckt, in welchem Bereich der Zulauf 30 die Gassenbleche 34 ausbildet. Der erste Manipulator 13 kann somit bereits in parallelen Reihen bewegte Artikel 2 bzw. Getränkebehälter 4 vom Zulauf 30 entgegennehmen.

Bestandteil der Stapelbildungsvorrichtung 1 ist zudem eine Transporteinrichtung 40, welche die mit der Bezugsziffer 11 bezeichnete und als fahrerloses Transportfahrzeug 15 ausgebildete Transportvorsehung 11 umfasst. Die Transporteinrichtung 40 besitzt zudem eine in Figuren 16 und 17 nicht mit dargestellte Steuer- und/oder Regeleinrichtung, welche mit dem fahrerlosen Transportfahrzeug 15 bzw. mit der Transportvorsehung 11 in Verbindung steht und eine unterbrechungsfreie Bewegung für das fahrerloses Transportfahrzeug 15 bzw. für die Transportvorsehung 11 vorgibt.

In der in Fig. 16 dargestellten Phase wurde die Transportvorsehung 11 bzw. das fahrerlose Transportfahrzeug 15 auf Veranlassung und durch Steuerungsbefehle der nicht mit dargestellten Steuer- und/oder Regeleinrichtung bereits in den Erfassungsbereich des ersten Manipulators 13 bewegt, so dass der erste Manipulator 13 Artikel 2 bzw. Getränkebehälter 4 auf der Transportvorsehung 11 bzw. auf dem fahrerlosen Transportfahrzeug 15 absetzen und stapeln kann, wobei hierauf folgend mehrere übereinander gestapelte Lagen an Artikeln 3, 3' bzw. 3" (vgl. Fig. 1) auf der Transportvorsehung 11 bzw. auf dem fahrerlosen Transportfahrzeug 15 angeordnet sind. Während des Absetzens und Stapelns von Artikeln 2 bzw. Getränkebehältern 4 auf der als fahrerloses Transportfahrzeug 15 ausgebildeten Transportvorsehung 11 wird die als fahrerloses Transportfahrzeug 15 ausgebildete Transportvorsehung 11 unterbrechungsfrei fortbewegt. Eine Bewegung des ersten Manipulators 13 und eine Bewegung bzw. fortlaufende Bewegung der als fahrerloses Transportfahrzeug 15 ausgebildeten Transportvorsehung 11 sind somit aufeinander abgestimmt. Während des Absetzens von Artikeln 2 bzw. Getränkebehältern 4 auf der als fahrerloses Transportfahrzeug 15 ausgebildeten Transportvorsehung 11 bewegt sich die als fahrerloses Transportfahrzeug 15 ausgebildete Transportvorsehung 11 in Förderrichtung FR. Die Förderrichtung FR verläuft parallel und vorliegend entgegengesetzt zu einer Bewegungsrichtung der über den Zulauf 30 bereits in parallelen Reihen geführten Artikel 2 bzw. Getränkebehälter 4.

Auch der zweite Manipulator 14 ist bei der in Figuren 16 und 17 gezeigten Ausführungsform Bestandteil der Stapelbildungsvorrichtung 1. Über den zweiten Manipulator 14 können weiterhin als Umverpackung 6 ausgebildete Schichten 5 auf der als fahrerloses Transportfahrzeug 15 ausgebildeten Transportvorsehung 11 abgesetzt werden, so dass eine jeweilige als Umverpackung 6 ausgebildete Schicht 5 benachbarte Lagen an Artikeln 3, 3' bzw. 3" (vgl. Fig. 1) in vertikaler Richtung voneinander trennt. Der zweite Manipulator 14 kann eine jeweilige als Umverpackung 6 ausgebildete Schicht 5 vom Stapel an Schichten 50 bzw. vom Stapel an Umverpackungen 60 entnehmen und beispielsweise als Mehrachsroboter ausgebildet sein.

In der in Fig. 17 gezeigten Prozessphase hat der erste Manipulator 13 bereits sämtliche Artikel 2 bzw. Getränkebehälter 4 einer auf dem als fahrerloses Transportfahrzeug 15 ausgebildeten Transportvorsehung 11 zu bildenden obersten Lage an Artikeln 3" (vgl. Fig. 1) an die als fahrerloses Transportfahrzeug 15 ausgebildete Transportvorsehung 11 überführt bzw. auf der als fahrerloses Transportfahrzeug 15 ausgebildeten Transportvorsehung 11 abgesetzt. Die oberste Lage an Artikeln 3" ist in der in Fig. 17 gezeigten Phase daher vollständig auf dem als fahrerloses Transportfahrzeug 15 ausgebildeten Transportvorsehung 11 angeordnet, wobei die als fahrerloses Transportfahrzeug 15 ausgebildete Transportvorsehung 11 einen Arbeitsbereich des ersten Manipulators 13 und einen Arbeitsbereich des zweiten Manipulators 14 jeweils verlassen hat. Die als fahrerloses Transportfahrzeug 15 ausgebildete Transportvorsehung 11 kann die mehreren übereinander gestapelten Lagen an Artikeln 3, 3' bzw. 3" sodann in Richtung einer Verladestation oder in Richtung einer Arbeitsstation bewegen, welche auf die übereinander gestapelten Lagen an Artikeln 3, 3' bzw. 3" eine weitere Umverpackung aufbringt.

Sowohl bei der in den Figuren 2 bis 14 beschriebenen Ausführungsvariante als auch bei der in den Figuren 16 und 17 beschriebenen Ausführungsvariante kann es vorkommen, dass eine jeweilige Transportvorsehung 11 in einen Arbeitsbereich des ersten Manipulators 13 und des zweiten Manipulators 14 gelangt, wobei sich hierbei auf der Transportvorsehung 11 bereits mehrere Artikel 2 oder bereits mindestens eine vollständige Lage an Artikeln 3, 3', 3" befinden können. Der erste Manipulator 13 kann für eine noch nicht auf der Transportvorsehung 11 befindliche Lage an Artikeln 3, 3' bzw. 3" vorgesehene Artikel 2 vom Zulauf 30 entgegennehmen und sodann mindestens eine weitere vollständige Lage an Artikeln 3, 3' bzw. 3" auf der Transportvorsehung 11 herstellen bzw. ausbilden.

Bei solchen Ausführungsformen kann es sein, dass sich die bereits auf der Transportvorsehung 11 befindlichen Artikel 2 von den Artikeln, welche über den Zulauf 30 dargeboten werden, unterscheiden. So können die bereits auf der Transportvorsehung 11 befindlichen Artikel beispielsweise durch Getränkebehälter 4 mit einer ersten Getränkesorte ausgebildet sein, wobei die über den Zulauf 30 dargebotenen Artikel 2 durch Getränkebehälter 4 mit einer zweiten Getränkesorte ausgebildet sind. Vorteilhafterweise können hierdurch einfach und unkompliziert sog. Mischpaletten unter Zuhilfenahme der Stapelbildungsvorrichtung 1 hergestellt werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, sofern dabei der Schutzbereich der nachstehenden Ansprüche nicht verlassen wird.

### Bezugszeichenliste

- 1: Stapelbildungsvorrichtung
- 2: Artikel
- 3: Lage an Artikeln, untere Lage an Artikeln
- 3': Lage an Artikeln, mittlere Lage an Artikeln
- 3": Lage an Artikeln, obere Lage an Artikeln
- 4: Getränkebehälter
- 5: Schicht
- 6: Umverpackung
- 8: Lasche
- 11: Transportvorsehung
- 12: Transportpalette
- 13: erster Manipulator, Manipulator
- 14: zweiter Manipulator, Manipulator
- 15: Fahrerloses Transportfahrzeug
- 20: Palettenzusammenstellung
- 30: Zulauf
- 32: Anlagebalken
- 34: Gassenblech
- 40: Transporteinrichtung
- 50: Stapel an Schichten, Stapel
- 60: Stapel an Umverpackungen, Stapel

- FR: Förderrichtung
- S: Steuer- und/oder Regeleinrichtung
- S1: erster Verfahrensschritt
- S2: zweiter Verfahrensschritt
- S3: dritter Verfahrensschritt
- S4: vierter Verfahrensschritt

## Patentansprüche

1. Verfahren zum Stapeln von Artikeln (2) und/oder Stückgütern mittels einer Stapelbildungsvorrichtung (1) nach einem der Ansprüche 3 bis 7, umfassend folgende Schritte:
- Bereitstellen mindestens einer Transportvorsehung (11),
- Durchführen eines Stapelbildungsprozesses, wobei vorgesehen ist, dass die mindestens eine Transportvorsehung (11) durch mindestens eine Transportpalette (12) ausgebildet wird, auf welcher mindestens einen Transportpalette (12) im Rahmen des Stapelbildungsprozesses Artikel (2) und/oder Stückgüter abgesetzt und gestapelt werden, so dass nach einem Beenden des Stapelbildungsprozesses auf der mindestens einen Transportpalette (12) wenigstens zwei übereinander gestapelte Lagen an Artikeln und/oder Stückgütern (3, 3', 3") angeordnet sind und wobei im Rahmen des Stapelbildungsprozesses wenigstens eine übereinander gestapelte Lagen an Artikeln und/oder Stückgütern (3, 3', 3") trennende und insbesondere als Umverpackung (6) ausgebildete Schicht (5) auf der mindestens einen Transportpalette (12) abgesetzt wird, wobei im Rahmen des Stapelbildungsprozesses eine jeweilige Ist-Position der jeweiligen Transportpalette (12) sensorisch festgestellt und/oder über den Zeitverlauf sensorisch überwacht wird, und wobei
a) Artikel (2) und/oder Stückgüter abgestimmt auf die sensorisch festgestellte Ist-Position und/oder abgestimmt auf die über den Zeitverlauf vorgesehene sensorische Überwachung der jeweiligen Ist-Position auf der jeweiligen Transportpalette (12) abgesetzt werden, und/oder wobei
b) eine Bewegungsgeschwindigkeit der jeweiligen Transportpalette (12) unter Berücksichtigung der sensorisch festgestellten Ist-Position und/oder unter Berücksichtigung der über den Zeitverlauf vorgesehenen sensorischen Überwachung der jeweiligen Ist-Position geregelt wird,
wobei über die Steuer- und/oder Regeleinrichtung die Transporteinrichtung (40) derart angesteuert wird, dass die mindestens eine Transportpalette (12) während des Stapelbildungsprozesses durchgehend unterbrechungsfrei fortbewegt wird.

2. Verfahren nach Anspruch 1, bei welchem auf der mindestens einen Transportpalette (12) abzusetzende Artikel (2) und/oder abzusetzende Stückgüter mittels einer unterbrechungsfreien und vorzugsweise in mehreren parallelen Reihen ausgebildeten Bewegung dargeboten werden.

3. Stapelbildungsvorrichtung (1), umfassend
- wenigstens eine Transporteinrichtung (40) zur Bewegung mindestens einer Transportvorsehung (11), welche mindestens eine Transportvorsehung (11) von mindestens einer Transportpalette (12) ausgebildet wird sowie
- einen ersten Manipulator (13), welcher zum Herstellen wenigstens zweier übereinander gestapelter Lagen an Artikeln und/oder Stückgütern (3, 3', 3") auf einer jeweiligen über die wenigstens eine Transporteinrichtung (40) bewegten Transportpalette (12) ausgebildet ist, und
- einen zweiten Manipulator (14), welcher eine die jeweiligen wenigstens zwei übereinander gestapelten Lagen an Artikeln und/oder Stückgütern (3, 3', 3") trennende und insbesondere als Umverpackung (6) ausgebildete Schicht (5) auf der mindestens einen Transportpalette (12) absetzen kann,
wobei die wenigstens eine Transporteinrichtung (40) und der erste Manipulator (13) derart miteinander in Wirkverbindung stehen, dass die mindestens eine Transportpalette (12) durchgehend während des Herstellens der wenigstens zwei übereinander gestapelten Lagen an Artikeln und/oder Stückgütern (3, 3', 3") mittels der wenigstens einen Transporteinrichtung (40) bewegt wird,
wobei der zweite Manipulator (14) und die wenigstens eine Transporteinrichtung (40) derart miteinander in Wirkverbindung stehen, dass eine jeweilige Transportpalette (12) zeitlich unmittelbar bei Absetzen einer jeweiligen die wenigstens zwei übereinander gestapelten Lagen an Artikeln und/oder Stückgütern (3, 3', 3") trennenden und insbesondere als Umverpackung (6) ausgebildeten Schicht (5) auf der mindestens einen Transportpalette (12) unterbrechungsfrei bewegt wird,
wobei die Stapelbildungsvorrichtung (1) weiterhin mindestens eine Sensorik umfasst, welche mindestens eine Sensorik zum Feststellen einer jeweiligen Ist-Position einer jeweiligen über die wenigstens eine Transporteinrichtung (40) bewegtenTransportpalette (12) ausgebildet ist, und/oder welche mindestens eine Sensorik zum Überwachen einer jeweiligen Ist-Position über den Zeitverlauf einer jeweiligen über die wenigstens eine Transporteinrichtung (40) bewegten Transportpalette (12) ausgebildet ist,
und wobei die Stapelbildungsvorrichtung (1) eine Steuer- und/oder Regeleinrichtung umfasst, mit welcher die Transporteinrichtung (4), der erste Manipulator (13) und der zweite Manipulator (14) in Wirkverbindung stehen bzw. von dieser gesteuert werden.

4. Stapelbildungsvorrichtung nach Anspruch 3, umfassend einen Zulauf (30), welcher zum Darbieten kontinuierlich bewegter Artikel (2) und/oder kontinuierlich bewegter Stückgüter an den mindestens einen Manipulator (13, 14) ausgebildet ist, welche kontinuierlich bewegten und über den Zulauf (30) dargebotenen Artikel (2) und/oder Stückgüter zum Herstellen der wenigstens zwei übereinander gestapelten Lagen an Artikeln und/oder Stückgütern (3, 3', 3") vorgesehen sind.

5. Stapelbildungsvorrichtung nach Anspruch 3 oder 4, bei welcher der erste Manipulator (13) und der zweite Manipulator (14) auf gegenüberliegenden Seiten der wenigstens einen Transporteinrichtung (40) angeordnet sind.

6. Stapelbildungsvorrichtung nach einem der Ansprüche 3 bis 5, bei welcher der zweite Manipulator (14) Laschen (8) einer jeweiligen die wenigstens zwei übereinander gestapelten Lagen an Artikeln und/oder Stückgütern (3, 3', 3") trennenden und als Umverpackung (6) ausgebildeten Schicht (5) einschlagen und/oder auffalten kann.

7. Stapelbildungsvorrichtung nach einem der Ansprüche 3 bis 6, bei welcher der mindestens eine Manipulator (13, 14) die wenigstens zwei übereinander gestapelten Lagen an Artikeln und/oder Stückgütern (3, 3', 3") auf einer jeweiligen über die wenigstens eine Transporteinrichtung (40) bewegten Transportpalette (12) unter Berücksichtigung der jeweiligen über die mindestens eine Sensorik festgestellten und/oder über den Zeitverlauf überwachten Ist-Position herstellen kann, und/oder wobei vorgesehen ist, dass eine via die wenigstens eine Transporteinrichtung (40) zur Bewegung der jeweiligen Transportpalette (12) ausgebildete Transportgeschwindigkeit unter Berücksichtigung der jeweiligen über die mindestens eine Sensorik festgestellten und/oder über den Zeitverlauf überwachten Ist-Position regelbar ist.

## Claims

1. A method for stacking articles (2) and/or piece goods by means of a stack forming apparatus (1) according to one of the claims 3 to 7, the method comprising the following steps:
- supplying at least one transport provision (11),
- carrying out a stack formation process, wherein it is provided that the at least one transport provision (11) is formed by at least one transport pallet (12), on which at least one transport pallet (12) articles (2) and/or piece goods are deposited and stacked as part of the stack formation process, such that at least two layers of articles and/or piece goods (3, 3', 3"), which layers are stacked on top of one another, are arranged on the at least one transport pallet (12) after completion of the stack formation process, and wherein at least one pad (5) is deposited on the at least one transport pallet (12) as part of the stack formation process, which pad (5) separates stacked layers of articles and/or piece goods (3, 3', 3") and which pad (5) is formed, in particular, as outer packaging (6), wherein a particular actual position of the particular transport pallet (12) is sensor-detected and/or sensor-monitored over the course of time as part of the stack formation process, and wherein
a) articles (2) and/or piece goods are deposited on the particular transport pallet (12) in coordination with the sensor-detected actual position and/or in coordination with the sensor monitoring provided over the course of time for the particular actual position, and/or wherein
b) a movement speed of the particular transport pallet (12) is adjusted taking into account the sensor-detected actual position and/or taking into account the sensor monitoring provided over the course of time for the particular actual position,
wherein the transport device (40) is controlled via the control device and/or regulating device such that the at least one transport pallet (12) is moved along in a continuously uninterrupted manner during the stack formation process.

2. The method according to claim 1, in which articles (2) and/or piece goods to be deposited on the at least one transport pallet (12) are staged by means of an uninterrupted movement preferably formed in a plurality of parallel rows.

3. A stack forming apparatus (1), comprising
- at least one transport device (40) to move at least one transport provision (11), which at least one transport provision (11) is formed by at least one transport pallet (12), and
- a first manipulator (13), which is designed to produce at least two stacked layers of articles and/or piece goods (3, 3', 3") on a particular transport pallet (12) that is being moved via the at least one transport device (40), and
- a second manipulator (14), which can deposit a pad (5) on the at least one transport pallet (12), which pad (5) separates the particular at least two stacked layers of articles and/or piece goods (3, 3', 3") and which pad (5) is formed, in particular, as outer packaging (6),
wherein the at least one transport device (40) and the first manipulator (13) are in operative connection with one another in such a manner that the at least one transport pallet (12) is moved in a continuous manner by means of the at least one transport device (40) during the production of the at least two stacked layers of articles and/or piece goods (3, 3', 3"),
wherein the second manipulator (14) and the at least one transport device (40) are in operative connection with one another in such a manner that a particular transport pallet (12) is moved in an uninterrupted manner temporally immediately with a particular pad (5) being deposited on the at least one transport pallet (12), which pad (5) separates the at least two stacked layers of articles and/or piece goods (3, 3', 3") and which pad (5) is formed, in particular, as outer packaging (6), wherein the stack forming apparatus (1) furthermore comprises at least one sensor system, which at least one sensor system is designed to detect a particular actual position of a particular transport pallet (12) being moved via the at least one transport device (40), and/or which at least one sensor system is designed to monitor a particular actual position over the course of time of a particular transport pallet (12) being moved via the at least one transport device (40),
and wherein the stack forming apparatus (1) comprises a control device and/or regulating device, with which the transport device (4), the first manipulator (13), and the second manipulator (14) are in operative connection or by which they are controlled.

4. The stack forming apparatus according to claim 3, comprising an infeed (30) designed to stage articles (2) and/or piece goods, which are being moved in a continuous manner, to the at least one manipulator (13, 14), which articles (2) and/or piece goods, which are being moved in a continuous manner and staged via the infeed (30), are provided to produce the at least two stacked layers of articles and/or piece goods (3, 3', 3").

5. The stack forming apparatus according to claim 3 or 4, in which the first manipulator (13) and the second manipulator (14) are arranged on opposite sides of the at least one transport device (40).

6. The stack forming apparatus according to one of the claims 3 to 5, in which the second manipulator (14) can fold in and/or fold out flaps (8) of a particular pad (5), which separates the at least two stacked layers of articles and/or piece goods (3, 3', 3") and which is formed as outer packaging (6).

7. The stack forming apparatus according to one of the claims 3 to 6, in which the at least one manipulator (13, 14) can produce the at least two stacked layers of articles and/or piece goods (3, 3', 3") on a particular transport pallet (12), which is being moved via the at least one transport device (40), taking into account the particular actual position detected via the at least one sensor system and/or monitored over the course of time, and/or wherein it is provided that a transport speed formed via the at least one transport device (40) to move the particular transport pallet (12) is adjustable taking into account the particular actual position detected via the at least one sensor system and/or monitored over the course of time.

## Revendications

1. Procédé d'empilage d'articles (2) et/ou de produits de détail au moyen d'un dispositif de formation de pile (1) selon l'une quelconque des revendications 3 à 7, comprenant les étapes suivantes consistant à:
- fournir au moins une prévision de transport (11),
- mettre en œuvre un processus de formation de pile, dans lequel il est prévu que ladite au moins une prévision de transport (11) est formée par au moins une palette de transport (12), sur laquelle au moins une palette de transport (12) sont placés et empilés des articles (2) et/ou des produits de détail dans le cadre du processus de formation de pile, de sorte que, après avoir achevé le processus de formation de pile, au moins deux couches d'articles et/ou de produits de détail (3, 3', 3"), empilées les unes sur les autres, sont disposées sur ladite au moins une palette de transport (12), et dans lequel au moins une couche (5) séparant des couches d'articles et/ou de produits de détail (3, 3', 3"), empilées les uns sur les autres, et en particulier conçue comme emballage supplémentaire (6) est placée sur ladite au moins une palette de transport (12) dans le cadre du processus de formation de pile, dans lequel une position réelle respective de la palette de transport (12) respective est déterminée par capteur et/ou surveillée par capteur au fil du temps dans le cadre du processus de formation de pile, et dans lequel
a) des articles (2) et/ou des produits de détail sont placés sur la palette de transport (12) respective en fonction de la position réelle déterminée par capteur et/ou en fonction de la surveillance réalisée par capteur de la position réelle respective, prévue au fil du temps, et/ou dans lequel
b) une vitesse de déplacement de la palette de transport (12) respective est réglée en tenant compte de la position réelle déterminée par capteur et/ou en tenant compte de la surveillance réalisée par capteur de la position réelle respective, prévue au fil du temps,
dans lequel le dispositif de transport (40) est commandé par l'intermédiaire du dispositif de commande et/ou de régulation de telle manière que ladite au moins une palette de transport (12) est déplacée en continu sans interruption pendant le processus de formation de pile.

2. Procédé selon la revendication 1, dans lequel des articles (2) et/ou des produits de détail à placer sur ladite au moins une palette de transport (12) sont présentés au moyen d'un mouvement ininterrompu et formé de préférence en plusieurs rangées parallèles.

3. Dispositif de formation de pile (1) comprenant
- au moins un dispositif de transport (40) destiné à déplacer au moins une prévision de transport (11), laquelle au moins une prévision de transport (11) est formée par au moins une palette de transport (12), ainsi qu'
- un premier manipulateur (13) qui est conçu pour réaliser au moins deux couches d'articles et/ou de produits de détail (3, 3', 3"), empilées les unes sur les autres, sur une palette de transport (12) respective déplacée par l'intermédiaire dudit au moins un dispositif de transport (40), et
- un deuxième manipulateur (14) qui peut placer une couche (5) séparant lesdites au moins deux couches respectives d'articles et/ou de produits de détail (3, 3', 3"), empilées les unes sur les autres, et conçue en particulier comme emballage supplémentaire (6), sur ladite au moins une palette de transport (12),
dans lequel ledit au moins un dispositif de transport (40) et le premier manipulateur (13) sont en liaison active l'un avec l'autre de telle manière que ladite au moins une palette de transport (12) est déplacée en continu au moyen dudit au moins un dispositif de transport (40) pendant la réalisation desdites au moins deux couches d'articles et/ou de produits de détail (3, 3', 3"), empilées les unes sur les autres,
dans lequel le deuxième manipulateur (14) et ledit au moins un dispositif de transport (40) sont en liaison active l'un avec l'autre de telle manière qu'une palette de transport (12) respective est déplacée sans interruption immédiatement lorsqu'une couche (5) respective séparant lesdites au moins deux couches d'articles et/ou de produits de détail (3, 3', 3"), empilées les unes sur les autres, et conçue en particulier comme emballage supplémentaire (6), est placée sur ladite au moins une palette de transport (12),
dans lequel le dispositif de formation de pile (1) comprend en outre au moins un ensemble de capteurs, lequel au moins un ensemble de capteurs est conçu pour déterminer une position réelle respective d'une palette de transport (12) respective déplacée par l'intermédiaire dudit au moins un dispositif de transport (40), et/ou lequel au moins un ensemble de capteurs est conçu pour surveiller une position réelle respective au fil du temps d'une palette de transport (12) respective déplacée par l'intermédiaire dudit au moins un dispositif de transport (40),
et dans lequel le dispositif de formation de pile (1) comprend un dispositif de commande et/ou de régulation au moyen duquel le dispositif de transport (40), le premier manipulateur (13) et le deuxième manipulateur (14) sont en liaison active entre eux ou bien par l'intermédiaire duquel ils sont commandés.

4. Dispositif de formation de pile selon la revendication 3, comprenant une alimentation (30) qui est conçue pour présenter des articles (2) en mouvement continu et/ou des produits de détail en mouvement continu, audit au moins un manipulateur (13, 14), lesquels articles (2) et/ou produits de détail en mouvement continu et présentés par ladite alimentation (30) sont prévus pour réaliser lesdites au moins deux couches d'articles et/ou de produits de détail (3, 3', 3"), empilées les unes sur les autres.

5. Dispositif de formation de pile selon la revendication 3 ou 4, dans lequel le premier manipulateur (13) et le deuxième manipulateur (14) sont disposés sur des côtés opposés dudit au moins un dispositif de transport (40).

6. Dispositif de formation de pile selon l'une quelconque des revendications 3 à 5, dans lequel le deuxième manipulateur (14) peut replier et/ou déplier des languettes (8) d'une couche (5) respective séparant lesdites au moins deux couches d'articles et/ou de produits de détail (3, 3', 3"), empilées les unes sur les autres, et conçue comme emballage supplémentaire (6).

7. Dispositif de formation de pile selon l'une quelconque des revendications 3 à 6, dans lequel ledit au moins un manipulateur (13, 14) peut réaliser lesdites au moins deux couches d'articles et/ou de produits de détail (3, 3', 3"), empilées les unes sur les autres, sur une palette de transport (12) respective déplacée par l'intermédiaire dudit au moins un dispositif de transport (40), en tenant compte de la position réelle respective déterminée par ledit au moins un ensemble de capteurs et/ou surveillée au fil du temps, et/ou dans lequel il est prévu qu'une vitesse de transport réalisée via ledit au moins un dispositif de transport (40) pour déplacer la palette de transport (12) respective peut être réglée en tenant compte de la position réelle respective déterminée par ledit au moins un ensemble de capteurs et/ou surveillée au fil du temps.
